# EUROPÄISCHE PATENTSCHRIFT

(11) **EP 4 430 430 B1**
(45) Veröffentlichungstag und Bekanntmachung des Hinweises auf die Patenterteilung: **27.08.2025**
(21) Anmeldenummer: 22817237.5
(22) Anmeldetag: 11.11.2022
(51) Int. Cl.: G01S 17/931, G01S 13/931, G01S 17/42, G01S 17/02, G01S 13/86, G01S 7/481, B60Q 1/00, G01S 7/02

(54) **MULTISPEKTRALEMISSIONSEINRICHTUNG FÜR FAHRZEUGE ZUM AUSSTRAHLEN VON SICHTBAREM LICHT, LIDAR- UND RADARSTRAHLUNG SOWIE VERFAHREN UND VERWENDUNG**
MULTISPECTRAL EMISSION DEVICE FOR VEHICLES FOR EMITTING VISIBLE LIGHT, LIDAR RADIATION AND RADAR RADIATION, AND METHOD AND USE
DISPOSITIF D'ÉMISSION MULTISPECTRALE POUR VÉHICULES POUR ÉMETTRE UNE LUMIÈRE VISIBLE, UN RAYONNEMENT LIDAR ET UN RAYONNEMENT RADAR, AINSI QUE PROCÉDÉ ET UTILISATION

(30) Priorität: 12.11.2021 DE 102021129622
(43) Veröffentlichungstag der Anmeldung: 18.09.2024
(73) Patentinhaber: Fraunhofer-Gesellschaft zur Förderung der angewandten Forschung e.V., 80686 München (DE)
(72) Erfinder: BRENNER, Andreas, 52074 Aachen (DE); PONGRATZ, Ludwig, 52074 Aachen (DE); GILLNER, Arnold, 52074 Aachen (DE); DALLMANN, Thomas, 52074 Aachen (DE); FREIALDENHOVEN, Tim, 52074 Aachen (DE); TÄSCHNER, Kerstin, 01277 Dresden (DE); PREUSSNER, Thomas, 01277 Dresden (DE); SCHREIBER, Peter, 07745 Jena (DE); STEFANIDI, Dmitrii, 07743 Jena (DE); RUSKOWSKI, Jennifer, 47057 Duisburg (DE); GROLLIUS, Sara, 47057 Duisburg (DE)
(74) Vertreter: Jostarndt Patentanwalts-AG
(86) Internationale Anmeldenummer: PCT/EP2022/081678
(87) Internationale Veröffentlichungsnummer: WO 2023/084057

(56) Entgegenhaltungen:
- EP-A1- 3 514 576
- DE-A1- 102018 217 774
- US-A- 5 868 488

## Beschreibung

### TECHNISCHES GEBIET

Die vorliegende Erfindung betrifft eine Multispektralemissionseinrichtung, insbesondere für Fahrzeuge, eingerichtet zum Ausstrahlen von Licht und Radarstrahlung und LiDAR-Strahlung eingerichtet zum Detektieren von Fahrsituationen in einem Detektionsbereich mittels Radarstrahlung sowie zum Detektieren von Fahrsituationen in einem Detektionsbereich mittels Lichtstrahlung, insbesondere zwecks Unterstützung bei der Navigation des Fahrzeugs. Insbesondere betrifft die Erfindung auch ein Verfahren zum Ausstrahlen von Licht und Radarstrahlung und zum Erfassen zumindest von reflektierter Radarstrahlung. Nicht zuletzt betrifft die vorliegende Erfindung auch die Verwendung der Multispektralemissionseinrichtung für einen großen Wellenbereich elektromagnetischer Strahlung über 4 Größenordnungen. Insbesondere betrifft die Erfindung ein System und ein Verfahren gemäß dem Oberbegriff des jeweiligen unabhängigen Anspruchs.

### HINTERGRUND DER ERFINDUNG

Insbesondere bei Fahrzeug-Scheinwerfern wird bereits der Versuch unternommen, eine kombinierte Vorrichtung mit integrierter Funktionalität sowohl für Beleuchtung als auch für Radarstrahlung und LiDAR-Strahlung mit hoher Praxistauglichkeit zu schaffen. Dabei sind Platzbedarf und Robustheit bei der Konzipierung von Scheinwerfern insbesondere für Fahrzeuge wichtige Anforderungen. Eine kombinierte Anwendung von Licht- und Radarstrahlung hat sich insbesondere bei der Erfassung von Relativpositionen im Personenverkehr als vorteilhaft erwiesen. Fahrerassistenzsysteme, wie adaptive Abstandsregelungen, Spurhalteassistenten und Notbremssysteme, werden heute klassenübergreifend in vielen Fahrzeugen eingesetzt, insbesondere in Personenkraftwagen (PKW). Doch auch in der Schifffahrts- oder Luftfahrtbranche liefern solche Systeme Vorteile und werden bereits angewandt oder zumindest erprobt. Die Radar- und LiDAR-Technologie stehen dabei insbesondere für unterschiedliche Abstandsbereiche und Messsituationen für Abstandsmessungen, Geschwindigkeitsmessungen und Winkelmessungen im Vordergrund. Fraglich ist jedoch, an welcher Position am Fahrzeug die Radartechnologie und die LiDAR-Technologie sinnvoller Weise angeordnet werden sollte und möglicherweise mit weiteren Detektions-Komponenten interagieren sollte. Dabei birgt die konventionelle Integration der Radartechnologie in den Stoßfänger eines Straßenfahrzeugs ein hohes Schadensrisiko, insbesondere bereits bei kleinen Aufprällen oder nur leichten Kontakten des Fahrzeugs mit der Umgebung. Bei einer Integration im Kühlerbereich wiederum müssen Kompromisse für das Fahrzeugdesign in Kauf genommen werden. Eine weitere Herausforderung bei der Integration von Radarkomponenten in Fahrzeuge (insbesondere PKW), insbesondere in Frontpartien, besteht auch darin, Dämpfungen der Sende- und Empfangssignale an den einzelnen Materialschichten (insbesondere an der Stoßstange) und an den Lackschichten zu kompensieren. Üblicherweise müssen Artefakte und Echobilder im Radarsignal eliminiert werden. Anders ausgedrückt: Anwendungsbedingt ist die exakte Auswertung von Radarsignalen nicht trivial. LiDAR-Systeme wiederum benötigen einen optisch transparenten Strahlungsweg zur Umwelt und können nicht hinter opaken Fahrzeug-Bauelementen wie einem Stoßfänger angeordnet werden. Hier existieren Lösungen, die Messsysteme in den Kühlergrill mit transparenten Abdeckungen zu integrieren oder die Messsysteme hinter der Windschutzscheibe anzuordnen.

Die internationale Patentanmeldung WO 2020/079060 A1 der Anmelderin offenbart eine Multispektralemissionseinrichtung, insbesondere für Fahrzeuge, eingerichtet zum Ausstrahlen von Licht und Radarstrahlung und eingerichtet zum Erfassen zumindest von reflektierter Radarstrahlung, mit: einem Scheinwerfer mit einer lichttransparenten Scheinwerferabdeckung und einer hinter der Scheinwerferabdeckung angeordneten Lichtquelle; einem hinter der Scheinwerferabdeckung integriert in den Scheinwerfer angeordneten Radarmodul mit einer Radarantenneneinheit, die sich dadurch auszeichnet, dass die Multispektralemissionseinrichtung wenigstens eine radarstrahlungsmanipulierende Einrichtung aufweist, insbesondere eine frequenzselektive radarstrahlungsmanipulierende Einrichtung.

Diese bekannte Vorrichtung hat den Vorteil, die Ausstrahlung von Licht- und Radarstrahlung und die Erfassung von reflektierter Strahlung durch Scheinwerfer zu optimieren, insbesondere für Fahrzeuge oder Kraftfahrzeuge. Ferner realisiert sie die Ausstrahlung von Licht- und Radarstrahlung sowie die Erfassung von reflektierter Radarstrahlung so, dass sowohl die Licht- als auch die Radarstrahlung in Kombination miteinander in einer integrierten Bauweise in einer gemeinsamen Vorrichtung für die Navigation eines Fahrzeugs genutzt werden können, insbesondere auch bei vorteilhaften Nebeneffekten hinsichtlich konstruktiver Ausgestaltung und Platzbedarf oder auch hinsichtlich des möglichen Anwendungsspektrums und auch hinsichtlich hoher Zuverlässigkeit der Technologie.

Ferner besteht das Bedürfnis, ein Sensorsystem mit erweitertem Wellenlängenspektrum, insbesondere Multispektral-Wellenlängenbereiche von sichtbarem Licht bis hin zu Millimeterwellen bereitzustellen.

Aus der europäischen Patentanmeldung EP 3 514 576 A1 ist ein in einen Frontscheinwerfer integriertes Radarmodul und ein ebenfalls in den Frontscheinwerfer integrierter LiDAR-Sensor bekannt, mit dem vor einem Fahrzeug befindliche Objekte erkannt werden können. Aus dieser Schrift sind dem Fachmann die Vorteile verschiedener Sensortechnologien für einen jeweiligen Zweck bekannt, beispielsweise dass sich die Millimeterwellen des Radars für eine schnelle Erfassung insbesondere weit entfernter Objekte eignen, während LiDAR-Sensoren zur präzisen Erkennung eines Objekts genutzt werden.

Aus der deutschen Patentanmeldung DE 10 2018 217 774 A1 ist ein Verfahren zur Herstellung einer Radar- und Lichtausstrahlungsanordnung für Fahrzeuge bekannt, bei der eine radarstrahlungsformende Einrichtung einen leitenden Teil in Ausgestaltung als lichttransparente, elektrisch leitfähige Oxidschicht aufweist, bei der durch Dünnschichtabtrag ein Strukturmuster eingebracht wird.

Aus der amerikanischen Patentanmeldung US 5 868 488 A sind mit einem Lenkrad verbundene Scheinwerfer bekannt, die hinsichtlich ihrer Strahlungsrichtung in x- und y-Richtung in Abhängigkeit einer Lenkradstellung und eines Neigungssensors verstellt werden. Somit wird in Kurven gemäß dem Straßenverlauf auch Bereiche seitlich des Fahrzeugs ausgeleuchtet.

Ausgehend von diesem Stand der Technik besteht Interesse an einer Anordnung und einem Verfahren für kombinierte Lichtstrahlung mit erweitertem Wellenlängenspektrum und mit Radarausstrahlung, womit weitere Vorteile erzielt und der Nutzen für den Verkehrsteilnehmer weiter erhöht werden kann.

Die deutsche Patentanmeldung DE 10 2018 217 215 A1 der Anmelderin der vorliegenden Patentanmeldung offenbart einen Abblendlichtscheinwerfer mit einer Lichtquellenanordnung zur Erzeugung eines Lichtkegels aus Licht, das in der ersten Transversalrichtung (y) weniger divergent ist als in einer zu der ersten Transversalrichtung senkrechten zweiten Transversalrichtung (x); einem ersten, zweiten und dritten Linsenarray, die entlang der zweiten Transversalrichtung (x) nebeneinander angeordnet sind, um eingangsseitig jeweils von einem zugeordneten von in der zweiten Transversalrichtung nebeneinander angeordneten Segmenten (12a, 12b, 12c) des Lichtkegels (12) durchstrahlt zu werden und ausgangsseitig Abblendlicht (102) mit einer gegenüber dem Lichtkegel (12) veränderten Lichtstärkewinkelverteilung auszugeben.

Die deutsche Patentanmeldung DE 10 2018 217 213 A1 der Anmelderin der vorliegenden Patentanmeldung offenbart einen Fernlichtscheinwerfer mit einem Lichtquellenarray mit einer Mehrzahl von Lichtquellen; einem Wabenkondensor; einem Kollimator, der zwischen den Wabenkondensor und das Lichtquellenarray geschaltet ist, zum Ausleuchten des Wabenkondensors mit kollimiertem Licht der Mehrzahl von Lichtquellen, wobei das Lichtquellenarray eine erste Lichtquelle und zumindest eine zweite Lichtquelle aufweist, wobei das kollimierte Licht der ersten Lichtquelle des Lichtquellenarrays zu einer übersprechfreien Durchstrahlung des Wabenkondensors und einer Ausleuchtung eines ersten Fernfeldsegmentes führt und für jede der zumindest einen zweiten Lichtquelle das kollimierte Licht der jeweiligen zweiten Lichtquelle zu einer Durchstrahlung des Wabenkondensors mit Kanalübersprechen und einer Ausleuchtung eines schräg zu dem ersten Fernfeldsegment ausgerichteten zweiten Fernfeldsegmentes führt.

### ZUSAMMENFASSUNG DER ERFINDUNG

Aufgabe ist, eine Vorrichtung und ein Verfahren bereitzustellen, womit die Ausstrahlung von Beleuchtungs-Lichtstrahlung, LiDAR-Strahlung und Radarstrahlung und die Erfassung von reflektierter LiDAR- und Radar-Strahlung durch Scheinwerfer optimiert werden kann, insbesondere für Fahrzeuge oder Kraftfahrzeuge. Insbesondere besteht die Aufgabe darin, die Ausstrahlung von Beleuchtungs-Lichtstrahlung, LiDAR-Strahlung und Radarstrahlung und die Erfassung von reflektierter Strahlung derart zu realisieren, dass sowohl die Beleuchtungs-Lichtstrahlung, die LiDAR- als auch die Radarstrahlung in Kombination miteinander in einer integrierten Bauweise in einer gemeinsamen Vorrichtung für die Navigation eines Fahrzeugs genutzt werden können, insbesondere auch bei vorteilhaften Nebeneffekten hinsichtlich konstruktiver Ausgestaltung und Platzbedarf oder auch hinsichtlich des möglichen Anwendungsspektrums oder auch hinsichtlich hoher Zuverlässigkeit der Technologie. Ferner besteht die Aufgabe darin, die Montage des Scheinwerfers zu erleichtern und/oder das Sichtfeld der Sensoren schnell und zuverlässig einzustellen.

Diese Aufgabe wird durch ein multispektrales Sensor-Scheinwerfer-System gemäß Anspruch 1 sowie durch ein Verfahren gemäß dem jeweiligen nebengeordneten Verfahrensanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist. Erfindungsgemäß bereitgestellt wird eine Multispektralemissionseinrichtung, insbesondere für Fahrzeuge, beispielsweise Landfahrzeuge, Flugzeuge, Schiffe und U-Boote, eingerichtet zum Ausstrahlen von elektromagnetischer Strahlung und eingerichtet zum Erfassen zumindest von reflektierter Radarstrahlung und von reflektierter LiDAR-Strahlung, mit: einem Scheinwerfer mit einer lichttransparenten Scheinwerferabdeckung und einer hinter der Scheinwerferabdeckung angeordneten Lichtquelle; für sichtbares Licht als Scheinwerferlicht. Erfindungsgemäß wird eine Multispektralemissionseinrichtung, insbesondere für Fahrzeuge, eingerichtet zum Ausstrahlen von elektromagnetischer Strahlung und eingerichtet zum Erfassen zumindest von reflektierter Radarstrahlung, mit: einem Scheinwerfer mit einer lichttransparenten Scheinwerferabdeckung und einer hinter der Scheinwerferabdeckung angeordneten Lichtquelle für eine Aussendung von sichtbarem Licht als Scheinwerferlicht; einem hinter der Scheinwerferabdeckung integriert in den Scheinwerfer angeordneten Radarmodul mit einer Radarantenneneinheit, wobei die Multispektralemissionseinrichtung wenigstens eine strahlungsmanipulierende Einrichtung aufweist, so ausgestaltet, dass die Multispektralemissionseinrichtung wenigstens eine Sendeeinheit für LiDAR-Strahlung und eine Empfangseinheit für LiDAR-Strahlung und wenigstens zwei Strahlungsmanipulierer aufweist, wobei einer der Strahlungsmanipulierer für LiDAR-Strahlung eine LiDAR-Strahlungs-manipulierende Einrichtung ist, wenigstens ein weiterer der Strahlungsmanipulierer eine Radarstrahlungsmanipulierende Einrichtung ist, wobei der Strahlungsmanipulierer für LiDAR-Strahlung und die Sendeeinheit für LiDAR-Strahlung so angeordnet sind, dass der Strahlungsmanipulierer für LiDAR-Strahlung von der Sendeeinheit für LiDAR-Strahlung ausgestrahlte LiDAR-Strahlung umleitet, dass der Strahlungsmanipulierer für LiDAR-Strahlung so eingerichtet ist, dass von außen durch die Scheinwerferabdeckung hindurchgelangende LiDAR-Strahlung zu der Empfangseinheit für LiDAR-Strahlung geleitet wird und dass der Strahlungsmanipulierer für Radarstrahlung so eingerichtet ist, dass von außen durch die Scheinwerferabdeckung hindurchgelangende Radarstrahlung zu der Empfangseinheit für Radarstrahlung geleitet wird und wobei die Sendeeinheit für LiDAR-Strahlung der Strahlungsmanipulierer für LiDAR-Strahlung, das Radarmodul und der Strahlungsmanipulierer für Radarstrahlung so angeordnet sind, dass wenigstens ein Strahlungskegel der umgeleiteten LiDAR-Strahlung und wenigstens ein Strahlungskegel der umgeleiteten Radarstrahlung zueinander ausgerichtet werden können.

Erfindungsgemäß werden Radar- und LiDAR-Sensoren in die Scheinwerfer integriert, die ein Optimum an Transmission für optische Sensoren und Lichtquellen sowie für Verschmutzungsfreiheit garantieren. Ein oder mehrere LiDAR-Sensoren (Light Detection And Ranging) arbeiten mit einem Messprinzip, das auf der Bestimmung der Zeit zwischen dem Aussenden eines Laserpulses und dem Empfangen des reflektierten Lichts beruht, und können auf diese Weise Entfernungen sehr genau messen und verschiedene Objekte gut voneinander unterscheiden.

Eine besonders bevorzugte Ausgestaltung der Multispektralemissionseinrichtung zeichnet sich dadurch aus, dass wenigstens ein Strahlungskegel der umgeleiteten LiDAR-Strahlung und wenigstens ein Strahlungskegel der umgeleiteten Radarstrahlung parallel zueinander, paraxial und/oder koaxial bzw. innerhalb sich überlappender Ausstrahlungskegel verlaufen können.

Die wenigstens teilweise koaxiale Strahlenführung ist vorteilhaft, um einen Parallaxenfehler zu vermeiden, der sonst noch kompliziert herausgerechnet werden müsste.

Eine besonders zweckmäßige Weiterbildung der Multispektralemissionseinrichtung zeichnet sich dadurch aus, dass wenigstens ein Strahlungskegel der umgeleiteten LiDAR-Strahlung (104) und wenigstens ein Strahlungskegel der umgeleiteten Radarstrahlung zusätzlich überlappend verlaufen können.

Diese Ausgestaltung bezieht sich auf die Überlappung eines LiDAR- und Radarstrahlungskegels, insbesondere auf die Überlappung der dargestellten LiDAR- und Radarstrahlungskegel. Die Überlappung eines LiDAR- und Radarstrahlungskegels bringt insbesondere folgende technische Vorteile mit sich.

Zum einen ergibt sich durch eine hiermit ermöglichte höhere Sensordichte ein kompakterer Bauraum. Zum anderen werden die um mehrere Größenordnungen verschiedenen Wellenlängen hiermit so vereinigt, dass weitere Detektionsmöglichkeiten beispielsweise in Hinblick auf die Bewegung eines Objekts, welches die Signale reflektiert, relativ zur Multispektralemissionseinrichtung, geschaffen werden. Hierdurch wird auch eine Allwettertauglichkeit sowohl der Bestimmung von translatorischen oder rotatorischen Bewegungskomponenten von Objekten, insbesondere anderen Fahrzeugen oder Fußgängern gewährleistet. Ferner wird hiermit eine schnelle und präzise Bestimmung sowohl von Abständen als auch von Geschwindigkeiten und Beschleunigungen gewährleistet.

Hierdurch wird die Unempfindlichkeit der Radarstrahlung gegen Regen und Nebel besonders gut mit der besonders hohen Auflösung der LiDAR-Strahlung kombiniert.

Eine besonders zweckmäßige Weiterbildung der Erfindung sieht vor, dass der Strahlungskegel des Scheinwerferlichts ebenfalls koaxial zu den Strahlungskegeln der LiDAR- und Radarstrahlung verläuft. Hierdurch wird ein überlappendes gemeinsames Sichtfeld als überlappendes gemeinsames field of view (FOV) gewährleistet, durch das die Kalibration des LiDAR- und Radarsystems zueinander für eine gemeinsame Detektion der gleichen Objekte vereinfacht wird. Dabei können die LiDAR- und Radarmessung unabhängig voneinander aufgenommen und zur gegenseitige Validierung verwendet werden oder die Daten werden für eine verbesserte Messung fusioniert, zum Beispiel indem die Messdaten des einen Systems für verbesserte Einstellungen und damit eine verbesserte Messung durch das andere System eingesetzt werden können oder indem die Rohdaten beider Systeme gemeinsam ausgewertet werden.

Besonders vorteilhafte Ausgestaltungen der Erfindung ermöglichen eine Vereinigung von Wellenlängen über 4 Größenordnungen von 400 nm bis 4 mm.

Die Multispektralemissionseinrichtung strahlt vorzugsweise elektromagnetische Strahlung in wenigstens drei Wellenlängenbereichen aus, in bevorzugter Ausführung über vier Größenordnungen hinweg.

Eine zweckmäßige Weiterbildung der Erfindung sieht vor, dass wenigstens ein Strahlungskegel der umgeleiteten LiDAR-Strahlung, wenigstens ein Strahlungskegel der umgeleiteten Radarstrahlung und ein Strahlungskegel des Scheinwerferlichts parallel zueinander, paraxial und/oder koaxial oder sich überlappend verlaufen können.

Eine besonders bevorzugte Ausgestaltung der Multispektralemissionseinrichtung zeichnet sich dadurch aus, dass wenigstens ein Strahlungskegel der umgeleiteten LiDAR-Strahlung (104) und wenigstens ein Strahlungskegel der umgeleiteten Radarstrahlung und wenigstens ein Strahlungskegel der Scheinwerferstrahlung zusätzlich paraxial und/oder überlappend verlaufen können.

Es ist besonders zweckmäßig, drei Koaxialitäten zu erreichen: für wenigstens einen Strahlungskegel der umgeleiteten LiDAR-Strahlung, wenigstens einen Strahlungskegel der umgeleiteten Radarstrahlung und wenigstens einen Strahlungskegel des Scheinwerferlichts.

Die Positionen der in dieser Anmeldung für die LiDAR-Strahlung offenbarten Komponenten und der für die Radarstrahlung offenbarten Komponenten können miteinander vertauscht werden. Dies gilt insbesondre für die dargestellten Sensorkomponenten und die Strahlungsmanipulierer.

Insbesondere können die Strahlungsmanipulierer für LiDAR-Strahlung und der Strahlungsmanipulierer für Radarstrahlung im Scheinwerfer unabhängig voneinander positioniert werden. Dies gilt auch unabhängig von der Positionierung im Strahlungsgang. Insbesondere kann sich der Strahlungsmanipulierer für LiDAR-Strahlung in Strahlungsgang sowohl vor als auch nach dem Strahlungsmanipulierer für Radarstrahlung befinden.

Vorzugsweise zeichnet sich die die Multispektralemissionseinrichtung dadurch aus, dass sie wenigstens eine Sendeeinheit für LiDAR-Strahlung und eine Empfangseinheit für LiDAR-Strahlung und wenigstens zwei Strahlungsmanipulierer aufweist, wobei ein einer der Strahlungsmanipulierer eine LiDAR-Strahlungs-manipulierende Einrichtung ist, wenigstens ein weiterer der Strahlungsmanipulierer eine Radarstrahlungsmanipulierende Einrichtung ist, wobei der Strahlungsmanipulierer für LiDAR-Strahlung und die Sendeeinheit für LiDAR-Strahlung so angeordnet sind, dass der Strahlungsmanipulierer für LiDAR-Strahlung von der Sendeeinheit für LiDAR-Strahlung ausgestrahlte LiDAR-Strahlung umleitet, dass der Strahlungsmanipulierer für LiDAR-Strahlung so eingerichtet ist, dass von außen durch die Scheinwerferabdeckung hindurchgelangende LiDAR-Strahlung zu der Empfangseinheit für LiDAR-Strahlung geleitet wird und dass der Strahlungsmanipulierer für Radarstrahlung so eingerichtet ist, dass von außen durch die Scheinwerferabdeckung hindurchgelangende Radarstrahlung zu der Empfangseinheit für Radarstrahlung geleitet wird und wobei die Sendeeinheit für LiDAR-Strahlung, der Strahlungsmanipulierer für LiDAR-Strahlung, das Radarmodul und der Strahlungsmanipulierer für Radarstrahlung so angeordnet sind, dass wenigstens ein Strahlungskegel der umgeleiteten LiDAR-Strahlung und wenigstens ein Strahlungskegel der umgeleiteten Radarstrahlung parallel und/oder koaxial und sich überlappend zueinander verlaufen.

Die Bezeichnung Radar stammt von den englischen Begriffen radio detection and ranging.

LiDAR-bezeichnet insbesondere eine Einrichtung, ein System (Light Detection and Ranging) beziehungsweise die hierbei eingesetzte Strahlung.

Auch im Übrigen werden in der vorliegenden Anmeldung Ausführungsbeispiele offenbart, bei denen, außer wenn es explizit ausgeschlossen wird, Weiterbildungen und Ausführungsformen, welche die LiDAR-Strahlung betreffen auch für die Radarstrahlung eingesetzt werden können.

Ebenso können Ausführungsbeispiele, bei denen außer wenn es explizit ausgeschlossen wird Weiterbildungen und Ausführungsformen, welche die Radarstrahlung betreffen auch für die LiDAR-Strahlung eingesetzt werden.

Eine besonders bevorzugte Ausgestaltung der Multispektralemissionseinrichtung zeichnet sich dadurch aus, dass sie wenigstens eine Sendeeinheit für LiDAR-Strahlung und eine Empfangseinheit für LiDAR-Strahlung und wenigstens zwei Strahlungsmanipulierer aufweist, wobei einer der Strahlungsmanipulierer eine LiDAR-Strahlungs-manipulierende Einrichtung ist, wenigstens ein Strahlungsmanipulierer für Radarstrahlung eine strahlungsmanipulierende Einrichtung ist, wobei der Strahlungsmanipulierer für LiDAR-Strahlung und die Sendeeinheit für LiDAR-Strahlung so angeordnet sind, dass der Strahlungsmanipulierer für LiDAR-Strahlung von der Sendeeinheit für LiDAR-Strahlung ausgestrahlte LiDAR-Strahlung so umleitet, dass wenigstens ein Strahlungskegel für umgeleitete LiDAR-Strahlung parallel und koaxial zu einem von der Lichtquelle emittierten Lichtkegel verläuft, wobei der der Strahlungsmanipulierer für Radarstrahlung eine vorzugsweise frequenzselektive Radarstrahlungsmanipulierende Einrichtung ist, wobei der Strahlungsmanipulierer für Radarstrahlung und das Radarmodul so angeordnet sind, dass der Strahlungsmanipulierer für Radarstrahlung von dem Radarmodul ausgestrahlte Radarstrahlung so umleitet, dass wenigstens ein Strahlungskegel für umgeleitete Radarstrahlung parallel, koaxial und/oder überlappend zu dem von der Lichtquelle (102) emittierten Lichtkegel verläuft, dass der Strahlungsmanipulierer für LiDAR-Strahlung (130) so eingerichtet ist, dass von außen durch die Scheinwerferabdeckung hindurchgelangende LiDAR-Strahlung zu der Empfangseinheit für LiDAR-Strahlung (150, 150b) geleitet wird und dass der zweite Strahlungsmanipulierer (140) so eingerichtet ist, dass von außen durch die Scheinwerferabdeckung hindurchgelangende Radarstrahlung zu der Empfangseinheit für Radarstrahlung (111) geleitet wird.

Strahlungsmanipulierer bezeichnet eine Einheit, die eingerichtet ist, eine oder mehrere der folgenden Veränderungen der elektromagnetischen Strahlung vorzunehmen:
- Reflexion;
- Transmission;
- Ablenkung;
- Strahlungsformung;
- Strahlungsfokussierung;
- Strahlungsteilung;
- Strahlungszusammenführung.

Bereitgestellt wird somit eine Multispektralemissionseinrichtung, insbesondere für Fahrzeuge, eingerichtet zum Ausstrahlen von elektromagnetischer Strahlung und eingerichtet zum Erfassen zumindest von reflektierter elektromagnetischer Strahlung, mit: einem Scheinwerfer mit einer lichttransparenten Scheinwerferabdeckung und einer hinter der Scheinwerferabdeckung, also in Ausstrahlungsrichtung vor der Scheinwerferabdeckung, angeordneten Lichtquelle und mit einem hinter der Scheinwerferabdeckung integriertem in den Scheinwerfer angeordneten Radarmodul mit mindestens einer Radarantenneneinheit und einem LiDAR-Modul mit mindestens einer LiDAR-Empfangseinheit, wobei die Multispektralemissionseinrichtung zwei Strahlungsmanipulierer aufweist.

Vorzugsweise wird ferner ein integraler Scheinwerfer mit hoher Transmission von Beleuchtungswellenlängen im sichtbaren Wellenlängenbereich, einem frequenzselektiven Strahlumlenker für die LiDAR-Wellenlänge und einem frequenzselektiven Strahlumlenker für die Radar-Strahlung, wobei alle drei Wellenlängenbereiche in einem koaxialen Systemkonzept vereinigt werden, bereitgestellt.

Die koaxiale bzw. sich überlappende Integration von Licht sowie LiDAR- und Radar-Sensorik ermöglicht die Vereinigung multispektraler Wellenlängenbereiche über mehrere Größenordnungen. Die mit dieser Erfindung realisierten Detektionsmöglichkeiten tragen wesentlich zu einer Steigerung des Automatisierungsgrads von Fahrzeugen auf dem Weg zum autonomen Fahren bei.

Die Erfindung weist mehrere sowohl einzeln realisierbare als auch miteinander kombinierbare Vorteile auf. Diese sind insbesondere:
- Detektion von Objekten im Fern- und Nahfeld, sowohl vor als auch neben dem Fahrzeug durch die Nutzung von LiDAR und Radar
- Erhöhung der Sensordichte im Fahrzeug: kompakter Bauraum durch koaxiale und/oder sich überlappende Integration von LiDAR, Radar und Lichttechnik im Scheinwerfergehäuse
- Steigerung der Zuverlässigkeit und Robustheit durch vereinfachte Datenfusion von komplementären Sensordaten aus LiDAR und Radar, welche die gleiche Detektionsrichtung besitzen
- Flexibilität bei der Nutzung des Scheinwerferbauraums durch Freiheitsgrade bei der Entwicklung der reflektiven/ transmissiven Strukturen bei Lenkung der Radar-Strahlung.

Erfindungsgemäß können ferner die in dieser Anmeldung offenbarten Multispektralemissionseinrichtungen so betrieben werden, dass LiDAR-Strahlung in Form eines primären LiDAR-Signals als gebündelte elektromagnetische Strahlung in einem LiDAR-Strahlungskegel emittiert wird, dass Radarstrahlung in Form eines primären Radarsignals als gebündelte elektromagnetische Strahlung in einem Radar-Strahlungskegel emittiert wird, dass der einem LiDAR-Strahlungskegel und der Radar-Strahlungskegel parallel, koaxial und sich überlappend zu einander verlaufen, dass von wenigstens einem Objekt reflektierte sekundäre LiDAR-Signale und von dem Objekt reflektierte Radarsignale unabhängig voneinander erfasst und gegebenenfalls miteinander verknüpft ausgewertet werden, dass sich aus der Auswertung einzelne, mehrere oder sämtliche der folgenden Informationen gewonnen werden:
- ein Winkel bzw. eine Richtung zum Objekt
- eine Entfernung zum Objekt (aus der Zeitverschiebung zwischen Senden und Empfangen)
- eine Relativbewegung zwischen der Multispektralemissionseinrichtung und dem Objekt
und dass bei der Auswertung die Parallelität, Koaxialität und Überlappung des LiDAR-Strahlungskegel und des Radar-Strahlungskegels berücksichtigt werden.

Besonders vorteilhaft ist eine Unabhängigkeit von Radar, LiDAR und Scheinwerferlicht, insbesondere in Bezug auf ihre Richtungen, die ein unabhängiges Scannen verschiedener Sensorwellenlängen und Beleuchtungswellenlängen ermöglicht.

Es ist, besonders vorteilhaft, dass wenigstens ein weiterer LiDAR-Strahlungskegel und/oder ein weiterer Radar-Strahlungskegel emittiert wird, so dass eine winkelauflösende Erkennung des Objektes erfolgt.

Erfindungsgemäß bereitgestellt wird ferner ein Fahrzeug, das sich dadurch auszeichnet, dass es mindestens eine der in dieser Anmeldung offenbarten Multispektralemissionseinrichtungen und eine Einheit für eine Fusion von Sensormessdaten für Radar und LiDAR aufweist.

Vorzugsweise wird mindestens eine Mikrooptik, insbesondere im Strahlengang des Scheinwerferlichts eingesetzt. Die Mikrooptik dient der Erzielung einer gewünschten Intensitätsverteilung des Scheinwerferlichts.

Hierdurch ist es möglich, das Scheinwerferlicht an betriebliche Anforderungen, insbesondere an betriebliche Anforderungen eines Fahrzeuges, in das der Scheinwerfer eingebaut ist, anzupassen.

Beispiele für so zuverlässig realisierbare Lichtszenarien sind Abblendlicht und Fernlicht.

Beim Abblendlicht handelt es sich um eine scharfe asymmetrische Hell-Dunkel-Grenze im oberen Teil des Strahls und einen mehr oder weniger starken Abfall im unteren und seitlichen Teil des Strahls.

Beim Fernlicht handelt es sich um ein symmetrisches Lichtbündel, aber mit der Möglichkeit der dynamischen Anpassung des Lichtbündels (Ein- und Ausschalten einzelner Segmente).

Dies kann auch mit einem herkömmlichen Scheinwerfer erreicht werden, aber mit der Mikrooptik ergibt sich der zusätzliche Vorteil einer höheren Transmission (d.h. Effizienz) und viel höheren Kompaktheit.

Vorzugsweise erfolgt der Einsatz einer Mikrooptik analog zu den in den deutschen Patentanmeldungen DE 10 2018 217 215 A1 DE 10 2018 217 213 A1 der Anmelderin der vorliegenden Patentanmeldung.

Ausgehend von kollimierten LED-Lichtquellen dient die Mikrooptik zur ECE-konformen Formung der Winkelverteilung der Intensität von Abblend- und Fernlicht. Zusätzlich wird die Funktionalität eines segmentierten Fernlichts realisiert, um die Blendung entgegenkommender Fahrer zu vermeiden. Verglichen mit herkömmlichen Optikrealisierungen für Automobilscheinwerfern z.B. mit Freiformspiegeln und Asphärenlinsen ermöglicht die mikrooptische Strahlumlenkung eine hohe Transmission, geringe Baulänge und flexible Auslegung der Konturen der Leuchtenmodule für Abblend- und Fernlicht.

Erfindungsgemäß wird insbesondere ein Integrationsansatz bereitgestellt, bei dem die elektromagnetische Strahlung von Scheinwerferlicht sowie LiDAR- und Radar-Sensorik über ein gemeinsam genutztes Transmissions- und Reflexionselement koaxial innerhalb eines Scheinwerfers zusammengeführt wird.

Vorzugsweise werden je nach Sensorsystem und genutztem Wellenlängenspektrum spezielle Dünnschichten verwendet, die zum Teil selektiv strukturiert sind. Auf diese Weise lassen sich Multispektral-Wellenlängenbereiche von sichtbarem Licht bis hin zu Millimeterwellen (in bevorzugter Ausführung von 400 nm bis 4 mm) über mehrere Größenordnungen koaxial integrieren. Die eigentlichen Sensoren und gegebenenfalls auch andere Komponenten von LiDAR-Modulen beziehungsweise Radarmodulen können dann außerhalb des Sichtbereichs des Scheinwerfers angebracht werden. Auf diese Weise entsteht ein kompaktes multispektrales Sensor-Scheinwerfer-System, das einfach kalibriert werden kann. LiDAR-Sender und LiDAR-Empfänger können bereits vor der Montage aufeinander ausgerichtet werden, die Ausrichtung nach der Montage ist jedoch besonders vorteilhaft, da bei der Ausrichtung nach der Montage insbesondere die Ausrichtung auf mindestens einen der Strahlungsmodifizier verbessert wird.

Das Scheinwerfer-System ist vorzugsweise so ausgelegt, dass weiterhin die flächenselektive Ausleuchtung als auch winkelauflösende Objekterkennung in Nah- und Fernbereich durch Radar, LiDAR und Array-Lichtemitter durchgeführt werden kann. Wellenlängenselektive Strukturen erlauben die Beeinflussung sensorspezifischer Spektralbereiche und dadurch die Reduktion thermischer Effekte durch unerwünschte Absorption. Durch weitere thermische Isolation der einzelnen Komponenten insbesondere ihre räumliche und thermische Entkopplung lassen sich auch im Integrationsansatz Phasenverschiebungen, erhöhte Rauschpegel und Ortungsungenauigkeiten von Sensorik und Beleuchtung weitgehend vermeiden. Durch den Einsatz von einzeln adressierbaren VCSEL-Arrays und Photodetektor-Pixeln werden hochselektive sensorische Situationen realisiert.

Die LiDAR-Sendeeinheit ist vorzugsweise ein Array-Lichtemitter. Alternativ kann dies auch ein einzelner Kantenemitter-Laser sein, aber VCSEL-Arrays sind besonders vorteilhaft.

Eine thermische Isolation der LiDAR-Sendeeinheit hat den Vorteil, dass sich durch thermische Isolation ein temperaturabhängiger Wellenlängendrift der LiDAR-Sendeeinheit vermeiden lässt. Das ist besonders vorteilhaft, weil der LiDAR-Empfänger einen definierten Bandpassfilter besitzt, durch den nur ein schmaler Wellenlängenbereich empfangen werden kann. Wenn der Laser aufgrund der Temperatur aus diesem Bereich driften würde, wird die sekundäre LiDAR-Strahlung nicht mehr empfangen. VCSEL-Arrays haben ferner den weiteren Vorteil, dass sie wesentlich temperaturunempfindlicher sind als herkömmliche Laser.

Durch die Anordnung der sichtbares Licht emittierenden Elemente, des Radar-Moduls und des LiDAR-Moduls können mithilfe der Strahlungsmanipulierer die wärmeabgebenden Komponenten thermisch voneinander getrennt werden. Hierdurch wird insbesondere die thermische Isolierung des LiDAR-Moduls, besonders der LiDAR-Sendeeinheit verbessert.

Im Gegensatz zu bisher erprobten Technologien ermöglicht die erfindungsgemäße Anordnung auf besonders flexible Weise und bei hoher Variabilität, die Vorteile wie z.B. Schutz und integrierte Bauform innerhalb des Scheinwerfers auch für die Radartechnologie und LiDAR-Technologie zu nutzen, ohne dass dadurch spürbare Einschränkungen hinsichtlich der Beleuchtungsfunktion in Kauf genommen werden müssen.

Die Scheinwerferabdeckung kann insbesondere aus einem transparenten Material, beispielsweise Glas oder transparenten Kunstoffen, bestehen. Die Scheinwerferabdeckung bzw. dessen Material ist (per se) transparent für Licht- und Radarstrahlung (HF-Wellen). Es ist besonders vorteilhaft, eine Scheinwerferabdeckung einzusetzen, die eine möglichst geringe Dämpfung, Brechungen und Streuung der eingesetzten elektromagnetischen Strahlung, vorzugsweise der Radarstrahlung, der LiDAR-Strahlung und des Scheinwerferlichts aufweist.

Als Radar ist dabei eine der bereits verfügbaren oder etablierten Technologien zum Aussenden und Erfassen elektromagnetischer Wellen gegebenenfalls unterschiedlicher Wellenlängenbereiche zu verstehen, also Radar im allgemeinen Sinne von "Radio Detection And Ranging" oder "Radio Direction And Ranging". Diese Radar-Technologie kann Wellen unterschiedlicher Frequenzbereiche umfassen.

Radarstrahlung wird in Form eines Primärsignal als gebündelte elektromagnetische Strahlung ausgesendet, und in Form von Objekten reflektierten Echos als Sekundärsignal empfangen und unter Berücksichtigung wenigstens eines Kriteriums ausgewertet.

Aus den empfangenen, vom Objekt reflektierten elektromagnetischen Wellen können einzelne, mehrere oder sämtliche der folgenden Informationen gewonnen werden:
- der Winkel bzw. die Richtung zum Objekt
- die Entfernung zum Objekt (aus der Zeitverschiebung zwischen Senden und Empfangen)
- die Relativbewegung zwischen Sender und Objekt - sie kann durch den DopplerEffekt aus der Verschiebung der Frequenz des reflektierten Signals berechnet werden
- das Aneinanderreihen einzelner Messungen liefert die Wegstrecke und die Absolutgeschwindigkeit des Objektes.

Als LiDAR ist dabei eine der bereits verfügbaren oder etablierten Technologien zum Aussenden und Erfassen elektromagnetischer Wellen insbesondere Nah-Infrarotstrahlung, vorzugsweise im Wellenlängenbereich von 800 nm - 3000 nm verwendet. Insbesondere handelt es sich um modulierte, vorzugsweise gepulste Laserstrahlung in einem Wellenlängenbereich oder in mehreren Wellenlängenbereichen.

LiDAR-Strahlung wird gleichfalls in Form eines Primärsignal als gebündelte elektromagnetische Strahlung ausgesendet, und in Form von Objekten reflektierten Echos als Sekundärsignal empfangen und unter Berücksichtigung wenigstens eines Kriteriums ausgewertet.

Aus den empfangenen, vom Objekt reflektierten elektromagnetischen Wellen können einzelne, mehrere oder sämtliche der folgenden Informationen gewonnen werden:
- der Winkel bzw. die Richtung zum Objekt
- die Entfernung zum Objekt (aus der Zeitverschiebung zwischen Senden und Empfangen)
- die Relativbewegung zwischen Sender und Objekt - sie kann durch den DopplerEffekt aus der Verschiebung der Frequenz des reflektierten Signals berechnet werden
- das Aneinanderreihen einzelner Messungen liefert die Wegstrecke und die Absolutgeschwindigkeit des Objektes.

Aus der Auswertung der Radarstrahlung und aus der der Auswertung der LiDAR-Strahlung ergeben sich vorzugsweise sich ergänzende und/oder sich überlappende Informationen.

Durch die Erfindung wird eine Multispektralemissionseinheit bereitgestellt, die insbesondere wenigstens teilweise koaxiale elektromagnetische Strahlung in wenigstens drei voneinander verschiedenen Wellenlängenbereichen, über mitunter vier Größenordnungen, abstrahlt.

Die erfindungsgemäße Multispektralemissionseinheit strahlt elektromagnetische Strahlung in wenigstens drei Wellenlängenbereichen, in bevorzugter Ausführung über vier Größenordnungen hinweg, aus:
- Sichtbare Lichtstrahlung, insbesondere im Bereich zwischen 400 nm und etwa 780 nm,
- LiDAR-Strahlung, insbesondere im Wellenlängenbereich zwischen 800 nm und 3000 nm, vorzugsweise in Wellenlängenbereichen von 860-940 nm und gegebenenfalls einem oder mehreren weiteren Wellenlängenbereichen, beziehungsweise einer oder mehreren weiteren Wellenlängen beispielsweise 1550 nm.
- Radarstrahlung, insbesondere in Wellenlängenbereichen zwischen 1 mm und 100 mm, insbesondere zwischen 3,7 mm und 4 mm.

Eine vorteilhafte Ausführungsform der Multispektralemissionseinrichtung zeichnet sich dadurch aus, dass der Strahlungsmanipulierer für LiDAR-Strahlung so ausgestaltet ist, dass von der Sendeeinheit für LiDAR-Strahlung ausgestrahlte LiDAR-Strahlung so umgeleitet wird, dass wenigstens ein weiterer Strahlungskegel für umgeleitete LiDAR-Strahlung gebildet wird und dass wenigstens eine Empfangseinheit für LiDAR-Strahlung vorgesehen ist, wobei die weitere Empfangseinheit für LiDAR-Strahlung so angeordnet ist, dass von außen durch die Scheinwerferabdeckung hindurchgelangende weitere LiDAR-Strahlung zu der Empfangseinheit für weitere LiDAR-Strahlung geleitet wird.

Eine zweckmäßige Ausführungsform der Multispektralemissionseinrichtung sieht vor, dass der Strahlungsmanipulierer für Radarstrahlung so ausgestaltet ist, dass von dem Radarmodul ausgestrahlte Radarstrahlung so umgeleitet wird, dass wenigstens ein weiterer Strahlungskegel für umgeleitete Radarstrahlung gebildet wird und dass wenigstens eine Empfangseinheit für Radarstrahlung vorgesehen ist, wobei die die Empfangseinheit und/oder eine weitere Empfangseinheit für Radarstrahlung so angeordnet ist, dass von außen durch die Scheinwerferabdeckung hindurchgelangende weitere Radarstrahlung in anderen Flächenbereichen empfangen wird als "die andere" sekundäre Radarstrahlung geleitet wird.

Die Umlenkung der Radarwellen erfolgt dabei um einen beliebigen, aber definierten Winkel, vorzugsweise 90°, mittels Reflect- und/ oder Transmittarrays. Die elektromagnetische Welle wird dadurch abgelenkt, ohne eine zusätzliche Bündelung zu erfahren. Das ermöglicht die Verwendung beliebiger Automobilradare am Scheinwerfer vor dem Umlenksystem, was einen wichtigen Vorteil darstellt.

Durch einen maßgeschneiderten Dünnschicht-Auftrag gepaart mit einem ortsselektiven Laserabtrag wird eine Struktur hergestellt, vorzugsweise bestehend aus phasensteuernden, polarisationsselektiven dielektrischen und/oder leitfähigen, lichttransparenten Schichten. Die Umlenkung der Radar-Strahlen kann unabhängig von der Form (z.B. planar, gekrümmt oder mit beliebigen Geometrien) des Reflect-/Transmittarrays erfolgen und bietet damit Freiheitsgrade bei der Realisierung des Gesamtsystems, insbesondere hinsichtlich der Strahlenwegführung von LiDAR und Lichtemitter.

Eine mögliche Ausgestaltung ist die Verwendung mehrerer solcher reflektiver, transmissiver oder gleichzeitig reflektiv und transmissiv agierender Strukturen zur Realisierung beliebiger Strahlenwege, um weitere Freiheitsgrade bei der Realisierung des Gesamtsystems zu schaffen.

Eine zusätzliche Ausgestaltung ist der Einsatz eines oder mehrerer solcher reflektiver, transmissiver oder gleichzeitig reflektiv und transmissiv agierender Strukturen zur Realisierung mehrerer Strahlenwege, um mehrere Radar- und/oder LiDAR-Sensoren zu nutzen. Dies beinhaltet auch die Abdeckung unterschiedlicher Erfassungsbereiche durch verschiedene Sensoren. Eine darauf aufbauende Ausgestaltung ist die Nutzung von zusätzlich frequenzselektiven Oberflächen, um Strahlenwege entlang der Frequenz teilen/ diskriminieren zu können.

Eine weitere vorteilhafte Ausgestaltung ist die Kombination elektrischer Elemente mit mechanisch verstellbaren Ausrichtungen, insbesondere durch Rotation), um optische Strahlen und Millimeterwellen gleichzeitig und/oder unabhängig voneinander anpassen/verändern zu können. Dies erfolgt insbesondere entsprechend der nachfolgend dargestellten bevorzugten Ausführungsformen.

Eine vorteilhafte Weiterbildung der Multispektralemissionseinrichtung zeichnet sich dadurch aus, dass wenigstens einer der Strahlungsmanipulierer (130, 140) entlang wenigstens einer Achse rotatorisch gelagert ist.

Bevorzugte Ausführungsformen der Erfindung ermöglichen eine schnelle und zuverlässige Anpassung eines oder mehrerer FOVs. FOV bezeichnet ein durch wenigstens einen der Strahlungsmanipulierer geändertes Sichtfeld (Field of View) eines jeweiligen Sensorempfängers, insbesondere des Radarmoduls beziehungsweise des LiDAR-Moduls.

Eine rotatorische Lagerung wenigstens eines der Strahlungsmanipulierer um eine z-Achse ist besonders bei einem erstmaligen Aufbau des Scheinwerfers vorteilhaft, da dies die Montage erleichtert.

Eine rotatorische Lagerung und aktive Verschwenkbarkeit wenigstens eines der Strahlungsmanipulierer (130, 140) um eine y-Achse ist besonders während eines Betriebs des Scheinwerfers vorteilhaft, da hierdurch ein horizontaler FOV schnell und zuverlässig eingestellt werden kann.

Eine zweckmäßige Ausführungsform der Multispektralemissionseinrichtung sieht vor, dass wenigstens einer der Strahlungsmanipulierer während eines Betriebs der Multispektralemissionseinrichtung um die y-Achse rotatorisch gelagert ist, so dass ein horizontaler FOV schnell und zuverlässig eingestellt werden kann.

Eine vorteilhafte Weiterbildung der Multispektralemissionseinrichtung zeichnet sich dadurch aus, dass wenigstens einer der Strahlungsmanipulierer (130, 140) während eines Betriebs der Multispektralemissionseinrichtung um eine x-Achse rotatorisch gelagert ist, so dass ein vertikaler FOV schnell und zuverlässig eingestellt werden kann.

Durch die in dieser Anmeldung dargestellten rotatorischen Lagerung und aktive Verschwenkbarkeit wenigstens eines der Strahlungsmanipulierer um die y-Achse kann der FOV der LiDAR-Strahlung und/oder der Radarstrahlung insbesondere während einer Fahrt eines mit wenigstens einer erfindungsgemäßen Multispektralemissionseinrichtung versehenen Fahrzeugs einem Kurvenverlauf einer Fahrstrecke folgend nach links beziehungsweise rechts geschwenkt werden.

Ferner können Autohersteller so Sensoren im Scheinwerfer passend einstellen, z.B. eher in Fahrtrichtung oder nach außen, insbesondere je nach den FOVs weiterer Sensoren am Auto.

Eine rotatorische Lagerung und aktive Verschwenkbarkeit wenigstens eines der Strahlungsmanipulierer um eine x-Achse ist besonders während eines Betriebs des Scheinwerfers vorteilhaft, da hierdurch ein vertikaler FOV schnell und zuverlässig eingestellt werden kann. Hierdurch kann ein FOV der LiDAR-Strahlung und/oder die Radarstrahlung insbesondere während einer Fahrt eines mit wenigstens einer erfindungsgemäßen Multispektralemissionseinrichtung versehenen Fahrzeugs einem Verlauf einer Fahrstrecke folgend bei Tälern/Bergen das FOV dem Straßenverlauf folgend hoch und runter geschwenkt werden.

Eine zweckmäßige Ausführungsform der Multispektralemissionseinrichtung sieht vor, dass wenigstens zwei der Strahlungsmanipulierer während des Betriebs der Multispektralemissionseinrichtung unabhängig voneinander jeweils um wenigstens eine der Achsen gedreht werden können, so dass durch separat erfolgende Rotation der zwei Strahlungsmanipulierer FOVs der LiDAR-Strahlung und der Radarstrahlung unabhängig voneinander eingestellt werden können.

Insbesondere ist es so möglich, den FOV der Radarstrahlung und der LiDAR-Strahlung voneinander unabhängig durch separat erfolgende Rotation von wenigstens zwei

Strahlungsmanipulierern zu ändern und somit die FOVs der LiDAR-Strahlung und der Radarstrahlung schnell, unabhängig und zuverlässig voneinander getrennt zu verändern und insbesondere getrennt voneinander zu verschwenken.

Gemäß der Erfindung ist die Multispektralemissionseinrichtung so auszugestalten, dass sie mit einer Steuerieinheit verbindbar ist, wobei die Steuerieinheit so eingerichtet ist, dass sie die Strahlungsmanipulierer während des Betriebs der Multispektralemissionseinrichtung so steuern kann, dass die Strahlungsmanipulierer unabhängig voneinander jeweils um wenigstens eine der Achsen gedreht werden können, so dass durch die separat erfolgende Rotation des wenigstens zwei Strahlungsmanipulierer FOVs der LiDAR-Strahlung und der Radarstrahlung unabhängig voneinander eingestellt werden können und dass die separat erfolgende Rotation der Strahlungsmanipulierer zur Erhöhung der Erfassungsgenauigkeit von Objekten eingesetzt werden kann.

Diese zweckmäßige Ausgestaltung der Multispektralemissionseinrichtung ermöglicht ein vorteilhaftes Verfahren ihrem Betreiben, das sich dadurch auszeichnet, dass die Multispektralemissionseinrichtung mit einer Steuereieinheit verbunden ist, wobei die Steuereieinheit die Strahlungsmanipulierer während des Betriebs der Multispektralemissionseinrichtung so steuert, dass die Strahlungsmanipulierer unabhängig voneinander jeweils um wenigstens eine der Achsen gedreht werden, so dass durch die separat erfolgende Rotation des wenigstens zwei Strahlungsmanipulierer FOVs der LiDAR-Strahlung und der Radarstrahlung unabhängig voneinander eingestellt werden können und dass die separat erfolgende Rotation der Strahlungsmanipulierer in Echtzeit zur Erhöhung der Erfassungsgenauigkeit von Objekten eingesetzt wird.

Gemäß der Erfindung ist ein Fahrzeug, das wenigstens eine - vorzugsweise wenigstens zwei - der in dieser Anmeldung dargestellten Multispektralemissionseinrichtungen enthält, so auszugestalten, dass es eine Steuerieinheit enthält, wobei die Steuereieinheit so eingerichtet ist, dass sie die Strahlungsmanipulierer während des Betriebs der Multispektralemissionseinrichtung so steuern kann, dass die Strahlungsmanipulierer unabhängig voneinander jeweils um wenigstens eine der Achsen gedreht werden können, so dass durch die separat erfolgende Rotation des wenigstens zwei Strahlungsmanipulierer FOVs der LiDAR-Strahlung und der Radarstrahlung unabhängig voneinander eingestellt werden können und dass die separat erfolgende Rotation der Strahlungsmanipulierer zur Erhöhung der Erfassungsgenauigkeit von Objekten eingesetzt werden kann.

Im Folgenden werden vorteilhafte Ausgestaltungen betreffend die Anordnung des Radarmoduls beschrieben.

Gemäß einem vorteilhaften Ausführungsbeispiel sind das Radarmodul und das LiDAR-Modul außerhalb (insbesondere unterhalb oder hinter) eines von der Lichtquelle emittierten Lichtkegels angeordnet. Anders ausgedrückt: Das Radarmodul und das LiDAR-Modul können außerhalb vom Lichtausbreitungsbereich angeordnet sein, also lateral beabstandet zur optischen Achse der Lichtquelle(n). Gemäß einem Ausführungsbeispiel sind das Radarmodul und/oder das LiDAR-Modul unterhalb einer den Lichtreflektor nach unten begrenzenden Tangentialebene oder Horizontalebene angeordnet. Gemäß einem Ausführungsbeispiel sind das Radarmodul und/oder das LiDAR-Modul außerhalb (insbesondere seitlich, oberhalb oder unterhalb) von einer optischen Achse oder einer Achse entsprechend der Haupt-Ausrichtung des Lichtreflektors oder der Lichtquelle angeordnet. Dies ermöglicht auch, die relative Anordnung zueinander zu optimieren. Wahlweise kann ein/das Radarmodul hinter der/den Lichtquellen angeordnet sein, insbesondere bei einer Ausrichtung der optischen Achse des Radarmoduls im Wesentlichen parallel zur (oder in Deckung mit der) Mittenlängsachse eines Lichtkegels der Lichtquellen. Dabei kann zwischen dem Radarmodul und den Lichtquellen ein Strahlungsmanipulierer angeordnet sein.

Radaremitter und -empfänger sowie LiDAR-emitter und -empfänger werden nicht im Strahlweg angeordnet, sondern außerhalb davon. Durch Reflexion der Radarstrahlung am Strahlungsmanipulierer und durch Umlenkung der Radarstrahlung im Bereich von 60 bis 120°, insbesondere 90°, kann bei vorteilhafter relativer Anordnung der einzelnen Komponenten eine Modifizierung der Radarstrahlung in Richtung Fahrzeugfront erfolgen und gleichzeitig kann auch eine Strahlungsumlenkung sichergestellt werden.

Insbesondere kann das Radarmodul bzw. ein Radaremitter und -empfänger vertikal nach oben ausgerichtet werden. Davor kann ein transparenter Strahlungsmanipulierer (insbesondere ein sogenanntes Fresnel Reflectarray) mit Beschichtung angeordnet werden. Die im Radarmodul verwendeten Antennen sind vorzugsweise planare Antennen (z.B. Patch). Die Antennen können vorzugsweise über Übertragungsleitungen (z.B. Microstrip-Leitungen) ohne zusätzliche Adapter in das Radarmodul integriert sein. Die Antennen können aus mehreren Einzelantennen oder Array-Antennen insbesondere in zweidimensionaler Anordnung bestehen.

Beide Strahlungsmanipulierer sind für das sichtbare Licht der Lichtquelle für Scheinwerferlicht transparent und reflektieren hauptsächlich die Radarstrahlung und/oder die LiDAR-Strahlung und leitet sie nach vorne durch die Scheinwerferabdeckung hindurch. Dabei modifiziert gegebenenfalls der Strahlungsmanipulierer die Radarstrahlung zu einer gegebenenfalls gewünschten Keulen- oder Flächenform.

Die Abdeckung kann beschichtet sein, um die frequenzselektive Durchlassstruktur bereitzustellen und um nur Radarstrahlung in einem gewissen Bandbereich hindurchzulassen.

Gemäß einem Ausführungsbeispiel sind das Radarmodul und das LiDAR-Modul in einem Bereich außerhalb des Lichtkegels des Scheinwerferlichts angeordnet. Dies liefert auch eine vorteilhafte Entkopplung von der Beleuchtungsfunktion.

Gemäß einem Ausführungsbeispiel sind das Radarmodul und/oder das LiDAR-Modul am Boden eines Gehäuses des Scheinwerfers angeordnet, insbesondere in mechanischer Kopplung zum Boden. Dies begünstigt auch eine Entkopplung von der Beleuchtungsfunktion.

Gemäß einem Ausführungsbeispiel sind das Radarmodul und/oder das LiDAR-Modul unterhalb der horizontalen Achse der elektromagnetischen Emissionsrichtung, wobei insbesondere das LiDAR-Modul um 90° gekippt ausgeführt wird und über ein zusätzliches LiDAR-modifizierendes Element gefaltet ist. Dies begünstigt die Kalibrierung des Systems und schafft ein kompakteres Gesamtsystem.

Gemäß einem Ausführungsbeispiel ist wenigstens einer der Strahlungsmanipulierer in einer Ausstrahlungsrichtung der Radarstrahlung angeordnet.

Gemäß einem Ausführungsbeispiel ist wenigstens einer der Strahlungsmanipulierer in Reflexionsrichtung der Radarstrahlung angeordnet.

Gemäß einem Ausführungsbeispiel ist wenigstens einer der Strahlungsmanipulierer in einer Ausstrahlungsrichtung der LiDAR-Strahlung angeordnet.

Gemäß einem Ausführungsbeispiel ist wenigstens einer der Strahlungsmanipulierer in Reflexionsrichtung der LiDAR-Strahlung angeordnet.

Gemäß einem Ausführungsbeispiel ist wenigstens einer der Strahlungsmanipulierer flächig ausgebildet, insbesondere planar oder gewölbt.

Gemäß einem Ausführungsbeispiel ist wenigstens einer der Strahlungsmanipulierer frequenzselektiv, insbesondere indem der Strahlungsmanipulierer eine frequenzselektive Strahlungsumlenkungsstruktur umfasst. Die radarstrahlungsmanipulierende Einrichtung ist insbesondere dadurch frequenzselektiv ausgestaltet, dass der für die Manipulation der Radarstrahlung eingesetzte Strahlungsmanipulierer leitfähige und/oder dielektrische Strukturen mit Abmessungen aufweist, welche auf die Wellenlänge der abgestrahlten Radarstrahlung (Frequenzen) abgestimmt sind.

Gemäß einem Ausführungsbeispiel ist wenigstens einer der Strahlungsmanipulierer in Ausstrahlungsrichtung der Lichtquelle angeordnet.

Gemäß einem Ausführungsbeispiel sind an wenigstens einer der radarstrahlungsmanipulierenden Einrichtung wenigstens zwei radarstrahlungsmanipulierende Bereiche mit jeweils individueller radarstrahlungsmanipulierender Funktion vorgesehen. Hierdurch ist es auch möglich, einen ersten Teil der Radarstrahlung individuell zu beeinflussen, und einen zweiten Teil der Radarstrahlung individuell auf eine andere Art und Weise als den ersten Teil zu beeinflussen, insbesondere zwecks optimierter Detektion in Nah- und Fernbereichen und/oder in Front- und Seitenbereichen.

Gemäß einem Ausführungsbeispiel sind wenigstens zwei der radarstrahlungsmanipulierenden Bereiche in derselben radarstrahlungsmanipulierenden Einrichtung angeordnet/ausgebildet. Dies ermöglicht auch eine umfangreiche FunktionsIntegration.

Insbesondere können die unterschiedlichen radarstrahlungsmanipulierenden Bereiche wenigstens einen elektrisch leitenden Bereich und wenigstens einen elektrisch nichtleitenden Bereich umfassen.

Die Radarstrahlung bildet insbesondere eine Strahlungsfront, welche mittels der erfindungsgemäßen Anordnung insbesondere in den elektrisch leitenden Bereichen reflektiert werden kann, so dass ein Interferenzmuster vordefiniert werden kann.

Im Folgenden werden vorteilhafte Ausgestaltungen betreffend die Ausrichtung des Radarmoduls und/oder des LiDAR-Moduls oder betreffend die Anordnung des Radarmoduls und/oder des LiDAR-Moduls relativ zu weiteren Komponenten beschrieben.

Gemäß einem Ausführungsbeispiel ist eine optische Achse des Radarmoduls und/oder des LiDAR-Moduls oder der Radarantenneneinheit in bestimmungsgemäßer Anordnung des Scheinwerfers zumindest annähernd nach vertikal oben (lotrecht) ausgerichtet. Gemäß einem Ausführungsbeispiel ist die optische Achse des Radarmodul und/oder dem LiDAR-Moduls oder der Radarantenneneinheit auf einen hinter der Scheinwerferabdeckung integriert in den Scheinwerfer und in Ausstrahlungsrichtung hinter der Lichtquelle angeordneten Strahlungsmanipulierers gerichtet, wobei die optische Achse des Radarmoduls und/oder des LiDAR-Moduls derart zum Strahlungsmanipulierer ausgerichtet ist, dass das Radarmodul und/oder das LiDAR-Modul am Boden des Scheinwerfers angeordnet ist. Dies ermöglicht jeweils auch eine örtliche Entkopplung des Radarmoduls und/oder des LiDAR-Moduls vom Lichtausbreitungsweg.

Die relative Platzierung des Radarmoduls und/oder des LiDAR-Moduls, wobei das Antennenmodul und das Radarmodul in einzelnen Ausführungsformen als separate Bauteile ausgeführt sind und in anderen als ein integriertes Bauteilbleibt vergleichsweise flexibel, insbesondere da es von der Außenseite des Scheinwerfers abgeschottet ist. Die hier beschriebene relative Platzierung hat sich als besonders vorteilhaft erwiesen.

Im Folgenden werden vorteilhafte Ausgestaltungen betreffend die Radarantenneneinheit beschrieben.

Gemäß einem Ausführungsbeispiel weist die Radarantenneneinheit eine Mehrzahl von einzelnen Antennen oder Antennenarrays in zweidimensionaler Anordnung auf. Dies begünstigt hohe Variabilität beim Einstellen der Strahlungscharakteristik.

Gemäß einem Ausführungsbeispiel ist die Radarantenneneinheit mittels Microstrip-Leitungen ohne zusätzliche Adapter in das Radarmodul integriert. Dies erleichtert auch die Integration.

Das Radarmodul kann insbesondere all jene HF-Frontends und elektronischen Komponenten und Schaltungen beinhalten, die auf planaren dielektrischen Substraten hergestellt werden können. Die Antennen befinden sich vorteilhafter Weise allesamt am Fuß (Boden) des Scheinwerfergehäuses in der Nähe der Scheinwerferabdeckung, insbesondere in von der Scheinwerferabdeckung zumindest teilweise überlappter Anordnung.

In einer Zwischenebene zwischen dem Strahlungsmanipulierer für LiDAR-Strahlung, beziehungsweise insbesondere für Radarstrahlung und dem Radarmodul, insbesondere in einer Richtung/Ebene zumindest annähernd orthogonal zur optischen Achse des Radarmoduls, ist eine strahlungswirksame Abdeckung angeordnet, insbesondere um das Radarmodul optisch abzuschotten. Die Abdeckung besteht vorteilhafter Weise aus ebenem, dünnem Kunststoff (insbesondere aus Polycarbonat), wobei der Kunststoff auf einer Seite dunkel beschichtet sein kann. Die Abdeckung ist bevorzugt dafür angeordnet und eingerichtet, als Hitzeschild für elektronische Bauteile zu wirken. Diese Anordnung der Abdeckung liefert auch einen schlanken konstruktiven Aufbau.

Im Folgenden werden vorteilhafte Ausgestaltungen betreffend einen Strahlungsmanipulierer für LiDAR-Strahlung, beziehungsweise insbesondere für Radarstrahlung der erfindungsgemäßen Anordnung beschrieben.

Gemäß einem Ausführungsbeispiel weist die Multispektralemissionseinrichtung einen hinter der Scheinwerferabdeckung integriert in den Scheinwerfer angeordneten Strahlungsmanipulierer für LiDAR-Strahlung, beziehungsweise insbesondere für Radarstrahlung auf, wobei das Radarmodul unterhalb, oberhalb oder seitlich vom Strahlungsmanipulierer für LiDAR-Strahlung, beziehungsweise insbesondere für Radarstrahlung angeordnet sein kann.

Ein Strahlungsmanipulierer für LiDAR-Strahlung, beziehungsweise insbesondere für Radarstrahlung und wahlweise auch eine Hochfrequenzlinse als Bestandteil der radarstrahlungsmanipulierenden Einrichtung können in der erfindungsgemäßen Anordnung die Radarstrahlung auf besonders flexible Weise (also bei hoher Variabilität) entsprechend der jeweiligen Situation anpassen, insbesondere weitgehend entkoppelt von der Beleuchtungsfunktion. Wird das Radarsystem in einen Kraftfahrzeug-Frontscheinwerfer integriert, so kann dessen Radarsignal insbesondere mittels wenigstens einer strukturierten leitfähigen Schicht/Oberfläche (Strahlungsumlenkungsstruktur insbesondere mit Mustern im Sinne von funktionalen Kleinstrukturen) in der Radarstrahlungsmanipulierenden Einrichtung auf den gewünschten Detektionsbereich maßgeschneidert werden. Zudem kann der Scheinwerfer eines Kraftfahrzeugs eine Schutz-Funktion auch für die Radartechnologie übernehmen, insbesondere dank der Scheinwerferabdeckung.

Gemäß einem Ausführungsbeispiel wird der Strahlweg der Radarstrahlung beziehungsweise LiDAR-Strahlung mittels des Strahlungsmanipulierers für LiDAR-Strahlung, beziehungsweise insbesondere für Radarstrahlung beziehungsweise LiDAR-Strahlung im Bereich von 60 bis 120°, insbesondere im Bereich von 90° umgelenkt, insbesondere zumindest annähernd in die Ausstrahlungsrichtung der Multispektralemissionseinrichtung ausgerichtet. Dies liefert auch Vorteile hinsichtlich relativer Anordnung der Komponenten zueinander.

Gemäß einem Ausführungsbeispiel weist der Strahlungsmanipulierer für LiDAR-Strahlung, beziehungsweise insbesondere für Radarstrahlung eine zweidimensionale Erstreckung auf. Dies kann den Aufbau auch maximal einfach und robust ausgestalten.

Gemäß einem Ausführungsbeispiel ist der Strahlungsmanipulierer, insbesondere dessen Innenseite, mit einer Neigung im Bereich von 35° bis 60°, insbesondere 40° bis 50°, relativ zur Ausstrahlungsrichtung z oder relativ zur Horizontalen angeordnet, zumindest abschnittsweise. Gemäß einem Ausführungsbeispiel ist der Strahlungsmanipulierer derart relativ zur Scheinwerferabdeckung angeordnet, dass der Strahlungsmanipulierer und die Scheinwerferabdeckung eine das Radarmodul und/oder dem LiDAR-Modul überdeckende Dachstruktur mit der Geometrie eines Satteldachs mit zwei entgegengesetzt geneigten Flächen bilden, insbesondere mit einem eingeschlossenen Winkel im Bereich von 45 bis 90°. Dies liefert jeweils auch eine vorteilhafte relative Anordnung und kann die Funktionsintegration erleichtern.

Gemäß einem Ausführungsbeispiel ist die Anordnung und/oder Ausrichtung des Strahlungsmanipulierers motorisch verstellbar. Dies ermöglicht auch eine große Variabilität und kann den Funktionsumfang erweitern.

Gemäß einem Ausführungsbeispiel weist der Strahlungsmanipulierer zumindest abschnittsweise eine dreidimensionale Erstreckung auf und ist eingerichtet, Radarstrahlung beziehungsweise LiDAR-Strahlung auch lateral zu reflektieren. Dies erweitert nicht zuletzt auch die Funktionalität. Insbesondere kann auch in kleinem Bauraum mit einfachen Mitteln eine hohe/breite Funktionalität sichergestellt werden. Gemäß einem Ausführungsbeispiel ist der Strahlungsmanipulierer für Radarstrahlung aus einer Mehrzahl von zweidimensionalen Elementen gebildet und weist dadurch je Element eine zweidimensionale oder bezüglich aller Elemente zweidimensionale oder dreidimensionale Erstreckung auf. Dies liefert auch eine hohe Variabilität.

Gemäß einem Ausführungsbeispiel ist der Strahlungsmanipulierer für Radarstrahlung als Fresnel-Reflektor ausgebildet, wobei beide Seiten des Strahlungsmanipulierers für Radarstrahlung eine frequenzselektive Strahlungsumlenkungsstruktur aufweisen. Dies ermöglicht eine sehr gezielte Einflussnahme auf die Strahlungscharakteristik.

Gemäß einem Ausführungsbeispiel besteht der Strahlungsmanipulierer für Radarstrahlung aus licht- und radarstrahlungstransparentem Substrat-Material und weist einen Strahlungsmanipulierer auf, insbesondere in Ausgestaltung als Beschichtung oder als elektrisch leitfähige Oberfläche, insbesondere mit frequenzselektiver Strahlungsumlenkungsstruktur. Dies kann auch einen besonders einfachen und robusten Aufbau sicherstellen. Die mindestens eine elektrisch leitfähige und für Licht transparente Schicht oder Oberfläche kann, unabhängig von deren Anordnung, insbesondere aus einem lichttransparentem elektrisch leitfähigen Oxid oder einer hinreichend dünnen Metallschicht, vorzugsweise aus Silber ausgebildet sein.

Gemäß einem Ausführungsbeispiel weist der Strahlungsmanipulierer eine strahlungsmanipulierende Einrichtung auf und ist derart relativ zur Scheinwerferabdeckung angeordnet, dass die Radarstrahlung vom Radarmodul beziehungsweise LiDAR-Strahlung vom LiDAR-Modul bis außerhalb von der Scheinwerferabdeckung wenigstens zweimal eine/die jeweilige frequenzselektive Strahlungsumlenkungsstruktur passiert/durchstrahlt. Dies liefert auch eine hohe Variabilität. Anders ausgedrückt: Die Radarstrahlung kann über einen ersten durch den Strahlungsmanipulierer für Radarstrahlung bereitgestellten Filter (erste Strahlungsumlenkungsstruktur) und nach Umlenkung auch noch über einen zweiten durch die Scheinwerferabdeckung bereitgestellten Filter (zweite oder weitere Strahlungsumlenkungsstruktur) geleitet werden. Analog kann die LiDAR-Strahlung über einen ersten durch den Strahlungsmanipulierer bereitgestellten Filter (erste Strahlungsumlenkungsstruktur) und nach Umlenkung auch noch über einen zweiten durch die Scheinwerferabdeckung bereitgestellten Filter (zweite oder weitere Strahlungsumlenkungsstruktur) geleitet werden.

Gemäß einem Ausführungsbeispiel ist der Strahlungsmanipulierer für Radarstrahlung aus einzelnen Reflektorelementen gebildet, die jeweils rechteckig oder dreieckig sind, insbesondere mit derselben Seitenlänge.

Dies liefert eine Art modularen Aufbau für hohe Variabilität, insbesondere bei einfachem Grund-Aufbau jedes einzelnen Reflektorelementes.

Gemäß einem Ausführungsbeispiel weist der Strahlungsmanipulierer für Radarstrahlung auf wenigstens einer seiner Oberflächen eine lichttransparente, elektrisch leitfähige Beschichtung insbesondere mit einer oder mehreren Oxidschichten oder elektrisch leitfähige Oberfläche auf. Dies liefert gute Reflexionsfähigkeit für die eingesetzte Wellenlänge der Radarstrahlung. Dabei kann der Strahlungsmanipulierer zumindest teilweise mittels der Oxidschicht bereitgestellt werden. Diese Art der Integration der Strahlungsumlenkungsstruktur liefert neben einer vergleichsweise hohen Variabilität (Stichwort: Einflussnahme auf die Art und Weise der Strahlungsausbreitung) auch Vorteile hinsichtlich des Platzbedarfs.

Gemäß einem Ausführungsbeispiel ist der Strahlungsmanipulierer für Radarstrahlung lichttransparent (transparent für LiDAR-Strahlung bzw. sichtbare Strahlung). Dies liefert auch eine gute Variabilität hinsichtlich einer Anordnung relativ zur Lichtquelle.

Gemäß einem Ausführungsbeispiel ist der LiDAR-Strahlungsmodifizierer transparent für Radarstrahlung.

Gemäß einem Ausführungsbeispiel ist der Strahlungsmanipulierer für Radarstrahlung eingerichtet, die Radarstrahlung zu formen, insbesondere in Keulen- oder Flächenform. Dies erweitert die Anwendungsmöglichkeiten.

Der Strahlungsmanipulierer für Radarstrahlung kann dabei aus Substratmaterial bestehen, welches nicht nur für das Licht, sondern auch für die HF-Wellen transparent ist. Insbesondere kann die Reflexionsfähigkeit dadurch eingestellt bzw. vorgegeben werden, dass eine oder zwei Seiten des Substrats mit einem sehr dünnen, transparenten, leitfähigen Oxid beschichtet werden.

Die Strahlungsmanipulierer werden bevorzugt in der Nähe des Scheinwerfergehäuses deutlich vor der Lichtquelle angeordnet. Die Anordnung erfolgt bevorzugt zwischen der Scheinwerferabdeckung und der Strahlformungsoptik.

Der Strahlungsmanipulierer für Radarstrahlung ist so geneigt bzw. derart ausgerichtet, dass die ausgesendeten HF-Wellen die vorgesehenen Objekte richtig ausleuchten können und dass die Empfangswellen auf die Empfangsantenne fokussiert werden können.

Im Folgenden werden vorteilhafte Ausgestaltungen betreffend wenigstens einen der radarstrahlungsmanipulierenden Einrichtung mit vorzugsweise frequenzselektiver Strahlungsumlenkungsstruktur beschrieben.

Gemäß einem Ausführungsbeispiel weist wenigstens eine bzw. die jeweilige radarstrahlungsmanipulierende Einrichtung mit frequenzselektiver Strahlungsumlenkungsstruktur zumindest abschnittsweise eine periodische Anordnung von Strukturmustern auf, mit den Strukturmustern insbesondere in konzentrischer Anordnung. Dies ermöglicht auch auf besonders flexible Weise, die erfindungsgemäße Anordnung hinsichtlich individueller Anwendungsfälle auszulegen und zu optimieren. Gemäß einem Ausführungsbeispiel ist der Strahlungsmanipulierer mit vorzugsweise frequenzselektiver Radarreflexionsstruktur als Beschichtung oder als Folie oder als elektrisch leitfähige Oberfläche ausgebildet. Dies kann den konstruktiven Aufbau weiter vereinfachen. Insbesondere kann eine Beschichtung auch als Ergänzung zu integrierten Mustern bzw. Strukturen vorgesehen sein.

Gemäß einem Ausführungsbeispiel bildet ein Polymer, insbesondere ein Polycarbonat ein vorteilhaftes Substrat für den Strahlungsmanipulierer bzw. für die frequenzselektive Radarreflexionsstruktur. Dies liefert einen besonders robusten Aufbau, insbesondere in der Art eines Basismoduls, welches für diverse Anwendungsfälle verwendet und weiter angepasst werden kann.

Gemäß einem Ausführungsbeispiel weist der Strahlungsmanipulierer einen leitenden Teil in Ausgestaltung als lichttransparente, elektrisch leitfähige Oxidschicht auf. Dies ermöglicht auch eine Optimierung der Reflexionseigenschaften.

Der Strahlungsmanipulierer kann unterschiedliche Ausgestaltungen aufweisen, welche sich nicht nur auf einfache Geometrien beschränken (z.B. komplementäre Schleife, Kreuz, Streifen), sondern können z.B. auch komplexere mäanderbasierte Schlitze beinhalten (insbesondere für den Bandpass), insbesondere um die Größe der Einheitszelle zu reduzieren und eine bessere Winkelstabilität zu erreichen.

Im Folgenden werden vorteilhafte Ausgestaltungen betreffend den Strahlungsmanipulierer und das Trägersubstrat für die radarstrahlungsmanipulierenden Einrichtung beschrieben.

Gemäß einem Ausführungsbeispiel besteht der Strahlungsmanipulierer aus licht- und radarstrahlungstransparentem Material, insbesondere aus Substrat-Material für die vorzugsweise frequenzselektive Radarreflexionsstruktur in Ausgestaltung als integrierte Beschichtung. Dies ermöglicht eine noch umfangreichere Funktionenintegration, insbesondere bei robuster Ausführung.

Gemäß einem Ausführungsbeispiel weist der Strahlungsmanipulierer eine Dicke entsprechend einem ganzzahligen Vielfachen der halben Wellenlänge der ausgestrahlten Radarstrahlung auf. Dies ermöglicht auch, die Transmissions-Eigenschaften zu optimieren.

Gemäß einem Ausführungsbeispiel ist auf beiden Seiten (innen und außen) des Strahlungsmanipulierers eine vorzugsweise frequenzselektive Radarreflexionsstruktur vorgesehen. Dies begünstigt eine besonders gezielte Einflussnahme auf die Strahlungscharakteristik.

Gemäß einem Ausführungsbeispiel ist die Multispektralemissionseinrichtung ohne Projektionslinse ausgestaltet, indem der Radar-Strahlweg vom Radarmodul über den Strahlungsmanipulierer für Radarstrahlung und die Scheinwerferabdeckung verläuft, der LiDAR-Strahlweg vom LiDAR-Modul über den Strahlungsmanipulierer für Radarstrahlung und die Scheinwerferabdeckung und indem der Lichtausbreitungsweg von der Lichtquelle und den Lichtreflektor direkt über die Scheinwerferabdeckung verläuft, also jeweils ohne weitere intermediäre optische oder strahlungswirksame Komponenten. Anders ausgedrückt: die gesamte Anordnung ist ohne Projektionslinse, also linsenlos. Dies liefert nicht zuletzt auch einen einfachen, kompakten, robusten Aufbau.

Im Folgenden wird eine beispielhafte Funktionsbeschreibung dargestellt.

Mittels der erfindungsgemäßen Anordnung kann über ein Sende- und Empfangsarray eine selektive Abtastung der Umgebungssituation realisiert werden, bei welcher nicht nur der Vorausbereich (frontal), sondern optional auch der Seitenbereich (lateral) abgedeckt werden kann. Dabei lässt sich im Scheinwerfer auch die Anzahl der erforderlichen Sensorsysteme verringern. Auch kann eine signifikant verbesserte Auflösung realisiert werden. Insbesondere bei laserbasierter Strukturierung von Dünnschichten kann auf flexible Weise eine gewünschte Strahlungsumlenkung realisiert werden, so dass die Anpassung der Radareigenschaften an den jeweiligen Scheinwerfertyp und an den gewünschten Abtastraum im Nah- und Fernfeld optimiert werden kann.

Es hat sich gezeigt, dass transparente Kunststoff-Substrate mit transparenten, aber elektrisch leitenden Schichten beschichtet werden können, welche anschließend lokal entfernt werden können. Für die Fertigung der individuell für einen jeweiligen Anwendungsfall auslegbaren Strukturen kann insbesondere auch ein Laserverfahren zum Dünnschichtabtrag angewandt werden, mit dem Vorteil weitgehend rückstandsfreien Abtrags ohne Schädigung des Substrats und ohne optische Nachteile.

Wahlweise kann das Aufbringen der Radarreflexionsstruktur auf lithografische Weise und/oder mittels maskierten Beschichtens sowie Bedrucken erfolgen.

Die zuvor genannte Aufgabe wird insbesondere auch gelöst durch eine Multispektralemissionseinrichtung, insbesondere für Fahrzeuge, eingerichtet zum Ausstrahlen von Licht, LiDAR-Strahlung und Radarstrahlung und eingerichtet zum Erfassen zumindest von reflektierter Radarstrahlung und reflektierter LiDAR-Strahlung, mit einem Scheinwerfer mit einer lichttransparenten Scheinwerferabdeckung und einer hinter der Scheinwerferabdeckung angeordneten Lichtquelle und einem Lichtreflektor; einem hinter der Scheinwerferabdeckung integriert in den Scheinwerfer angeordneten Radarmodul mit einer Radarantenneneinheit und/oder das LiDAR-Modul; wobei das Radarmodul und/oder das LiDAR-Modul in Ausstrahlungsrichtung z zwischen der Scheinwerferabdeckung und der Lichtquelle angeordnet ist, wobei das Radarmodul und/oder das LiDAR-Modul unterhalb einer optischen Achse oder einer Achse entsprechend der Haupt-Ausrichtung des Lichtreflektors oder der Lichtquelle angeordnet ist, wobei das Radarmodul und/oder das LiDAR-Modul in einem Bereich unterhalb, oberhalb oder seitlich von der Scheinwerferabdeckung in überlappender Anordnung mit der Scheinwerferabdeckung angeordnet ist, wobei eine optische Achse des Radarmoduls und/oder des LiDAR-Moduls oder der Radarantenneneinheit in bestimmungsgemäßer Anordnung des Scheinwerfers zumindest annähernd nach vertikal oben ausgerichtet ist, wobei die Multispektralemissionseinrichtung einen hinter der Scheinwerferabdeckung integriert in den Scheinwerfer angeordneten Strahlungsmanipulierer aufweist, wobei das Radarmodul und/oder dem LiDAR-Modul unterhalb, oberhalb oder seitlich vom Strahlungsmanipulierer angeordnet ist, wobei der Strahlungsmanipulierer für LiDAR-Strahlung, beziehungsweise insbesondere für Radarstrahlung entlang der optischen Achse oder einer Achse entsprechend der Haupt-Ausrichtung der Lichtquelle angeordnet ist, wobei ein/der Strahlweg der Radarstrahlung mittels des Strahlungsmanipulierer für Radarstrahlung im Bereich von 60 bis 120°, insbesondere im Bereich von 90° umgelenkt wird, insbesondere zumindest annähernd in die Ausstrahlungsrichtung z der Multispektralemissionseinrichtung ausgerichtet wird, und wobei der Strahlungsmanipulierer für Radarstrahlung, insbesondere dessen Innenseite, mit einer Neigung im Bereich von 35 bis 60°, insbesondere 40 bis 50°, relativ zur Ausstrahlungsrichtung z oder relativ zur Horizontalen angeordnet ist, zumindest abschnittsweise. Hierdurch ergeben sich zahlreiche zuvor genannte Vorteile.

Die zuvor genannte Aufgabe wird auch gelöst durch Verwendung einer Multispektralemissionseinrichtung, insbesondere einer zuvor beschriebenen Multispektralemissionseinrichtung, zum Ausstrahlen von Licht, LiDAR und zum vorzugsweise frequenzselektiven Ausstrahlen von Radarstrahlung und zum Vorgeben eines Radar-Detektionsbereichs mittels wenigstens einer, insbesondere mittels wenigstens zweier strahlungsmanipulierender Einrichtungen, insbesondere frequenzselektiver Reflexionsstrukturen, welche zumindest auch in oder an wenigstens einer Seite einer lichttransparenten und für Radarstrahlung transparenten Scheinwerferabdeckung der Multispektralemissionseinrichtung vorgesehen ist/sind, insbesondere im Strahlweg ausgehend von einem Radarmodul und/oder dem LiDAR-Modul in Reihe hintereinander in wenigstens zwei Positionen umfassend eine Position außerhalb bzw. innerhalb vom Lichtkegel der Lichtquelle (z.B. an einem oberhalb vom Radarmodul und/oder dem LiDAR-Modul angeordneten Strahlungsmanipulierer), insbesondere in einem Scheinwerfer eines Fahrzeugs, insbesondere in einem Scheinwerfer eines Automobils, wobei ein Radarmodul und/oder ein LiDAR-Modul der Multispektralemissionseinrichtung außerhalb eines von der Lichtquelle emittierten Lichtkegels, von der wenigstens einer, insbesondere unterhalb von den wenigstens zwei strahlungsmanipulierenden Einrichtungen angeordnet wird, mit einer nach oben, insbesondere zumindest annähernd orthogonal zur optischen Achse einer Lichtquelle des Scheinwerfers, ausgerichteten optischen Achse des Radarmoduls. Hierdurch ergeben sich zuvor genannte Vorteile. Das Fahrzeug kann ein Automobil (Kraftfahrzeug für die Straße) oder ein Luftfahrzeug oder ein Wasserfahrzeug sein.
- Die zuvor genannte Aufgabe wird auch gelöst durch eine Multispektralemissionseinrichtung für Fahrzeuge und eingerichtet zum Ausstrahlen von Licht, LiDAR- und Radarstrahlung und eingerichtet zum Erfassen zumindest von reflektierter Radarstrahlung, mit einem Scheinwerfer mit einer lichttransparenten und radartransparenten Scheinwerferabdeckung und einer hinter der Scheinwerferabdeckung angeordneten Lichtquelle und einem Lichtreflektor, und mit einem hinter der Scheinwerferabdeckung integriert in den Scheinwerfer angeordneten Radarmodul mit einer Radarantenneneinheit, insbesondere durch eine zuvor beschriebene Multispektralemissionseinrichtung, hergestellt durch Ausbilden wenigstens einer radarstrahlungsmanipulierenden Einrichtung, insbesondere in Ausgestaltung als frequenzselektiven Radarreflexionsstruktur, zumindest auch auf oder in der (optional als Substrat genutzten/dienenden) Scheinwerferabdeckung, wobei der Strahlungsmanipulierer einen leitenden Teil in Ausgestaltung als lichttransparente, elektrisch leitfähige Oxidschicht aufweist oder zumindest teilweise dadurch gebildet ist, und wobei in den Strahlungsmanipulierer durch Dünnschichtabtrag ein Strukturmuster eingebracht wird, insbesondere mittels Laser, beispielsweise Ultrakurzpulslaser mit Pulsdauern im Femto- bis Picosekundenbereich bzw. im Nanosekundenbereich
- Mit an die Schicht absorptionsangepassten Wellenlängen, insbesondere aber nicht ausschließlich im ultravioletten Wellenlängenbereich oder im sichtbaren Wellenlängenbereich.

Hierdurch ergeben sich zuvor genannte Vorteile. Es hat sich gezeigt, dass mittels Laser eingebrachte Strukturen auf besonders exakte Weise ermöglichen, Richtung und Abstrahlcharakteristik der Radarstrahlung zu steuern bzw. einzustellen und vorzugeben.

Die zuvor genannte Aufgabe wird auch gelöst durch ein Verfahren zum Ausstrahlen von Licht, LiDAR- und Radarstrahlung und zum Erfassen zumindest von reflektierter Radarstrahlung jeweils mittels einer Multispektralemissionseinrichtung, insbesondere mittels einer zuvor beschriebenen Multispektralemissionseinrichtung, insbesondere in einem Fahrzeug, wobei Licht von einer Lichtquelle eines Scheinwerfers durch eine lichttransparente und für Radarstrahlung transparente Scheinwerferabdeckung gemäß der Richtung einer optischen Achse der Lichtquelle ausgestrahlt wird, und wobei Radarstrahlung und/oder LiDAR-Strahlung von einem hinter der Scheinwerferabdeckung integriert im Scheinwerfer angeordneten Radarmodul und/oder dem LiDAR-Modul ausgestrahlt wird; wobei die Radarstrahlung und/oder LiDAR-Strahlung vom Radarmodul und/oder dem LiDAR-Modul in einer Richtung quer, insbesondere zumindest annähernd orthogonal, zur optischen Achse der Lichtquelle ausgestrahlt wird und über wenigstens eine zumindest auch auf oder in der Scheinwerferabdeckung vorgesehene radarstrahlungsmanipulierende Einrichtung, insbesondere in Ausgestaltung als frequenzselektive Radarreflexionsstruktur, in wenigstens eine Ausstrahlungsrichtung der Multispektralemissionseinrichtung umgelenkt wird, insbesondere zumindest annähernd parallel zur optischen Achse der Lichtquelle, insbesondere in Fahrtrichtung eines den Scheinwerfer ausrichtenden Fahrzeugs, wobei mittels der wenigstens einen radarstrahlungsmanipulierenden Einrichtung die Strahlungscharakteristik der Radarstrahlung vorgegeben wird. Hierdurch ergeben sich zuvor genannte Vorteile.

Gemäß einer Ausführungsform umfasst das Verfahren auch eine Detektion reflektierter Radarstrahlung, wobei die reflektierte Radarstrahlung insbesondere auf entgegengesetztem Strahlweg erfasst wird. Dies erweitert auch den Funktionsumfang.

Gemäß einer Ausführungsform wird in den Strahlungsmanipulierer durch Dünnschichtabtragung oder Dünnschichtauftragung ein Strukturmuster eingebracht. Dies kann beispielsweise mittels Laserabtrag, mittels einer Folie, mittels eines Druck-, Beschichtungs- bzw. Aufdampfverfahrens (Sputtern, thermisches Verdampfen und/oder Elektronenstrahlverdampfen) und/oder mittels Lithografie erfolgen.

Gemäß einer Ausführungsform wird der Strahlungsmanipulierer mittels Dünnschichtabtragung oder mittels Dünnschichtauftragung oder durch Aufbringen einer Folie hergestellt.

### KURZE BESCHREIBUNG DER FIGUREN

Weitere vorteilhafte Aspekte und bevorzugte Ausführungsformen der Erfindung finden sich in der nachfolgenden Darstellung bevorzugter Ausführungsformen der Erfindung. In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
- Figur 1: in einer perspektivischen Ansicht in schematischer Darstellung eine Multispektralemissionseinrichtung gemäß einem vorteilhaften Ausführungsbeispiel;
- Figur 2: in einer in schematischer Darstellung in Seitenansicht eine Multispektralemissionseinrichtung gemäß einem vorteilhaften Ausführungsbeispiel;
- Figur 3: die in Figur 1 dargestellte Multispektralemissionseinrichtung mit Darstellung des Strahlenganges, des hervorgehobenen Lagerpunkten für einen Lagerpunkt LiDAR-Reflektor und Manipulator und einen Radar-Reflektor und Manipulator;
- Figur 4: eine Aggregation und Fusion von Radar-(Iso-linien) und LiDAR-Messdaten zur Steigerung der Zuverlässigkeit und Robustheit von Sensordaten bei ADA-Systemen unter Einsatz einer erfindungsgemäßen Multispektralemissionseinrichtung;
- Figur 5: ein Funktionsprinzip eines LiDAR-Systems zur Distanzmessung mit Sender (Lichtquelle mit Sendeoptik, z. B. VCSEL-Array) mit Empfänger (Sensor mit Empfangsoptik) als Bestandteil einer erfindungsgemäßen Multispektralemissionseinrichtung und dazugehörige Elektronikkomponenten;
- Figur 6: eine Darstellung einer resultierenden Minderung der spektralen Reflexion unter Einsatz einer geeigneten einseitigen Beschichtung;
- Figur 7: eine Prinzipdarstellung einer für eine Phasensteuerung einer einfallenden Welle geeigneten Phasen verschiebenden Struktur;
- Figur 8: ein Diagramm bezüglich einer Abhängigkeit der Phase von der Patch Größe in mm;
- Figur 9: ein erfindungsgemäßes Reflectarray;
- Figur 10: eine Prinzipdarstellung der Ablenkung elektromagnetischer Wellen durch das in Figur 10 dargestellte Array.

### DETAILLIERTE BESCHREIBUNG DER FIGUREN

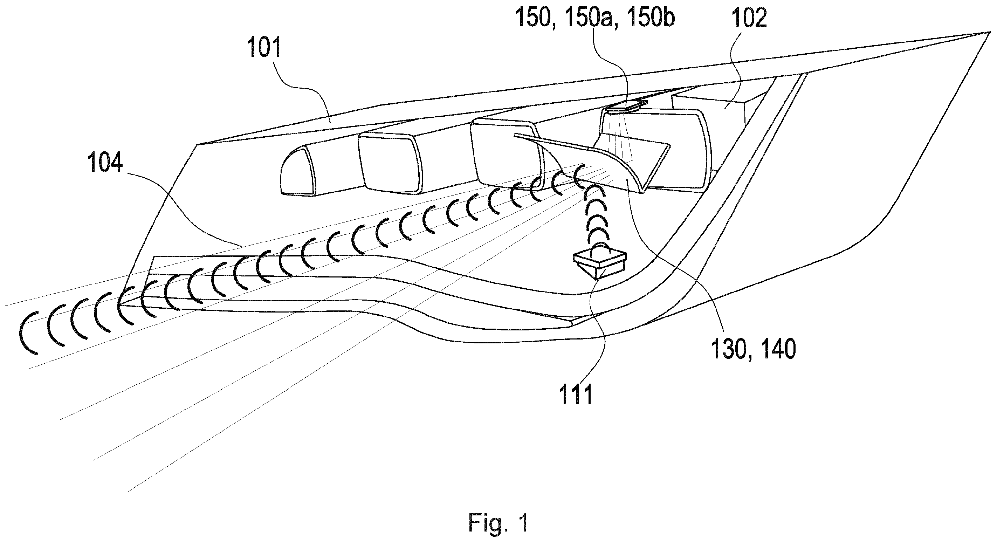

Figur 1 zeigt in einer perspektivischen Ansicht in schematischer Darstellung eine Multispektralemissionseinrichtung, insbesondere für Fahrzeuge, eingerichtet zum Ausstrahlen von elektromagnetischer Strahlung und eingerichtet zum Erfassen zumindest von reflektierter Radarstrahlung, mit:
einem Scheinwerfer (101) mit einer lichttransparenten Scheinwerferabdeckung und einer hinter der Scheinwerferabdeckung angeordneten Lichtquelle (102);
einem hinter der Scheinwerferabdeckung integriert in den Scheinwerfer angeordneten Radarmodul (111) mit einer Radarantenneneinheit, wobei die Multispektralemissionseinrichtung wenigstens eine strahlungsmanipulierende Einrichtung aufweist.

Diese Multispektralemissionseinrichtung zeichnet sich dadurch aus, dass sie wenigstens eine Sendeeinheit für LiDAR-Strahlung (150, 150a) und eine Empfangseinheit für LiDAR-Strahlung (150, 150b) und wenigstens zwei Strahlungsmanipulierer (130, 140) aufweist, wobei ein einer der Strahlungsmanipulierer (130) eine frequenzselektive LiDAR-Strahlstrahlungsmanipulierende Einrichtung ist, wenigstens ein Strahlungsmanipulierer für Radarstrahlung (140) eine frequenzselektive Radarstrahlungsmanipulierende Einrichtung ist, wobei der Strahlungsmanipulierer für LiDAR-Strahlung (130) und die Sendeeinheit für LiDAR-Strahlung (150, 150a) so angeordnet sind, dass der Strahlungsmanipulierer für LiDAR-Strahlung (130) von der Sendeeinheit für LiDAR-Strahlung (150, 150a) ausgestrahlte LiDAR-Strahlung so umleitet, dass wenigstens ein Strahlungskegel für umgeleitete LiDAR-Strahlung parallel und koaxial zu einem von der Lichtquelle (102) emittierten Lichtkegel verläuft, wobei ein Strahlungsmanipulierer (140) für Radarstrahlung eine frequenzselektive Radarstrahlungsmanipulierende Einrichtung ist, wobei der Strahlungsmanipulierer für Radarstrahlung (140) und das Radarmodul (111) so angeordnet sind, dass der zweite Strahlungsmanipulierer (140) von dem Radarmodul (111) ausgestrahlte Radarstrahlung so umleitet, dass wenigstens ein Strahlungskegel für umgeleitete Radarstrahlung parallel und koaxial zu dem von der Lichtquelle (102) emittierten Lichtkegel verläuft, dass der Strahlungsmanipulierer für LiDAR-Strahlung (130) so eingerichtet ist, dass von außen durch die Scheinwerferabdeckung hindurchgelangende LiDAR-Strahlung zu der Empfangseinheit für LiDAR-Strahlung (150, 150b) geleitet wird und dass der Strahlungsmanipulierer für Radarstrahlung (140) so eingerichtet ist, dass von außen durch die Scheinwerferabdeckung hindurchgelangende Radarstrahlung zu der Empfangseinheit für Radarstrahlung (111) geleitet wird. Dies erfolgt vorzugsweise koaxial und besonders bevorzugt über vier Wellenlängenbereiche.

In Fig. 1 ist ein Scheinwerfer 101 gezeigt, der eine Lichtquelle 102 (wahlweise auch Projektionslinse) und gegebenenfalls in einzelnen Ausführungsformen einen hier nicht dargestellten Lichtreflektor aufweist. Ferner weist der Scheinwerfer 101 eine lichttransparente Scheinwerferabdeckung 104 auf. Die Lichtquelle 102 ist derart gemäß einer optischen Achse 7 (Haupt-Ausrichtung) ausgerichtet, dass das Licht in einem Lichtkegel 109 durch die Scheinwerferabdeckung 104 emittiert wird. Dadurch ergibt sich ein Lichtausbreitungsweg 106, welcher ausgehend von der Lichtquelle 102 frontal nach vorne verläuft und lateral durch die Vorgaben des Lichtreflektors begrenzt wird. Gemäß einer Variante ist der Lichtausbreitungsweg 106 ein Lichtkegel.

Es ist besonders vorteilhaft, als Lichtquelle 102 Beleuchtungsmodulen mit kurzer Baulänge einzusetzen. Besonders vorteilhaft ist ein Einsatz von irregulären, mikrooptischen Wabenkondensoren als strahlformende Tertiäroptik für kollimierte LED-Lichtquellen. Die dargestellte Designarchitektur ermöglicht kleinste Modulaperturen (und damit kleine Abmessungen des Strahlungsmanipulierers mit flexibler Konturgestaltung und kürzeste Baulängen bei hoher Systemtransmission und erlaubt die Erfüllung der ECE-Standards für Frontscheinwerfer sowie schaltbare Winkelverteilungen zur blendfreien Beleuchtung.

Die Flexibilität bei der Auslegung der Kontur der Austrittsfenster der Beleuchtungsmodule erlaubt einerseits eine optimale Anpassung an die durch die LiDAR und Radar vorgegebene Strahlungsmanipulierermindestgröße, andererseits hilft sie die gestalterischen Vorgaben der Automobildesigner (z.B. schlitzförmige Scheinwerfer) zu erfüllen.

Die in Figur 1 gezeigte beispielhafte Realisierung kann entweder beide Module oder nur eines, dann vorzugsweise das schwächer divergente Fernlicht, mit LiDAR- und Radar-Strahlengang verschachteln. Die Beschränkung auf nur ein Modul verringert die erforderlichen Strahlungsmanipuliererabmaße. Die vorzugsweise Wahl des transmissiven Pfades für die breitbandige Beleuchtung (450-650nm) erleichtern Design und Realisierung des Strahlungsmanipulierers.

Der typische Abfall der Transmission des Strahlungsmanipulierers für große Winkel kann im Design des Beleuchtungsmoduls vorgehalten werden. Kritisch bleibt das an den Strahlungsmanipulierern entstehende Streulicht sowie Rückreflexionen. Optimierte Strahlungsmanipuliererdesigns optional zusammen mit abschirmenden Blenden ermöglichen die Einhaltung der ECE-Vorgaben z.B. für den Kontrast der Hell-Dunkelgrenze des Abblendlichts. Eine optionale synchronisierte Dunkeltastung der LEDs während des kurzen Zeitfensters des LiDAR-Empfangs verursacht eine Verringerung der Helligkeit nur um einen oder wenige Prozent, ermöglicht aber eine deutliche Verbesserung des LiDAR-SNR.

Es bezeichnen:
150 Kombinierte Sendeeinheit für LiDAR-Strahlung und eine Empfangseinheit für LiDAR-Strahlung
150a Sendeeinheit für LiDAR
150b Empfangseinheit für LiDAR

Der Einsatz der Strahlungsmanipulierer ermöglicht eine raumeffiziente und designfreundliche Lösung für eine bis zu 360°-Detektion bei Fahrzeugen durch die Implementierung im Scheinwerfer. Eine beispielhafte Ausführung in einem Frontscheinwerfer (ebenso im Rückscheinwerfer integrierbar) sowie die Bereiche der elektromagnetischen Strahlung in Abhängigkeit der Wellenlängen. Beispielhaft formt und reflektiert ein planarer Reflektor die LiDAR-Strahlung, während ein gekrümmter Reflektor die Radar-Strahlung ablenkt, ohne die LiDAR-Strahlung in ihrer Transmission zu beeinflussen. Die Form der Reflect-/Transmittarrays kann beliebig sein (planar, radial gekrümmt, oval gekrümmt) inklusive eines flexiblen Musterarrays der Beschichtung, damit beispielsweise Zentralpixel ein kleineres/größeres Field of View (FOV) erhalten als Randpixel vom LiDAR/Radar-System. Beide Bauelemente des Strahlungsmanipulierers lassen das Licht des Scheinwerfers transmittieren. Die Form und Position der Emitter (Sensor-Sender-Einheit) und der Umlenker bzw. Strahlformer (Strahlungsmanipulierer) ist exemplarisch und kann variieren.

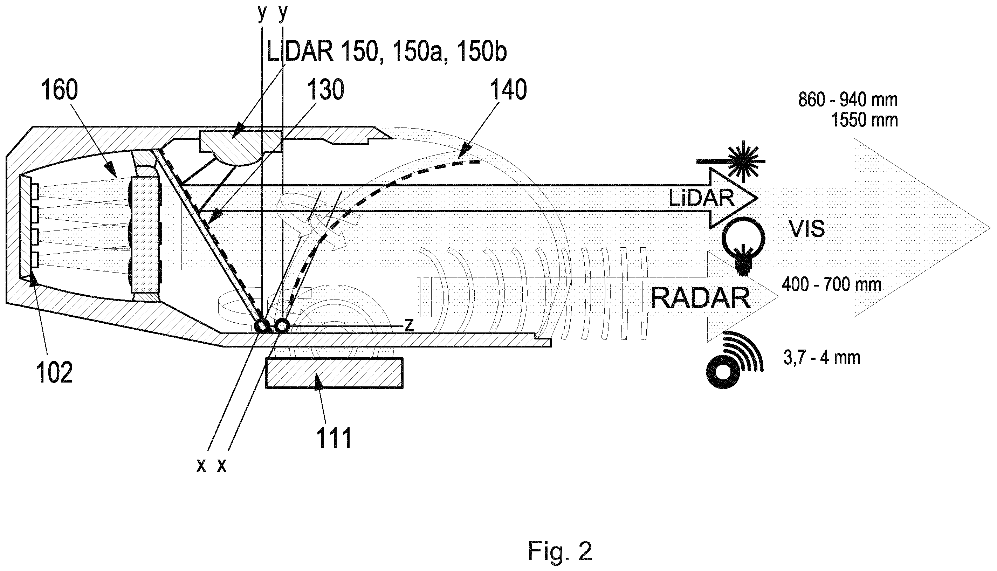

Figur 2 zeigt die in Fig. 1 dargestellte Multispektralemissionseinrichtung in einer schematischen Darstellung in Seitenansicht.

Ferner zeigt die Ausführungsformen gemäß der Figur 2 einen Einsatz einer Mikrooptik 160.

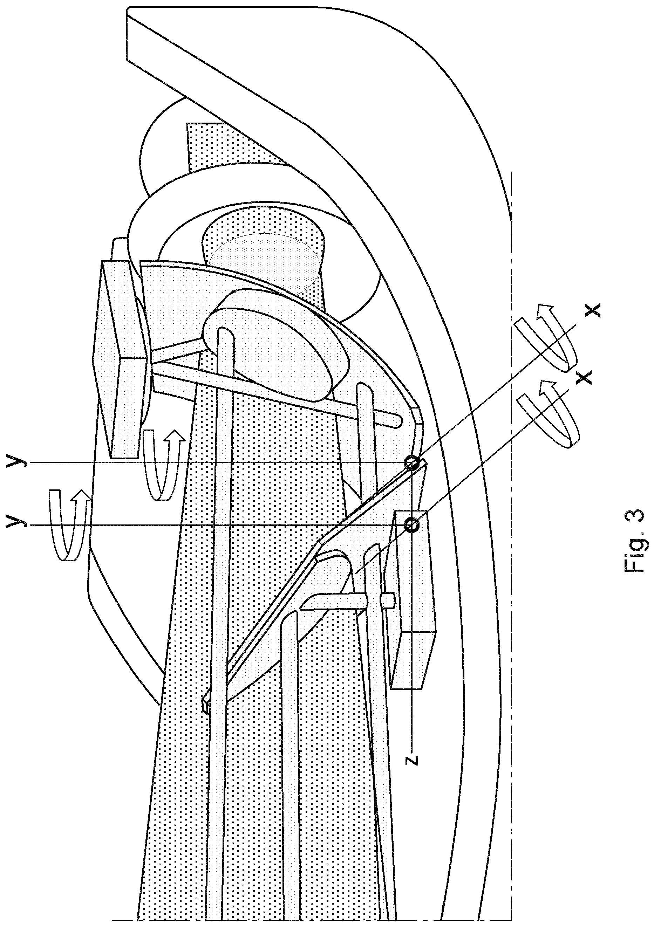

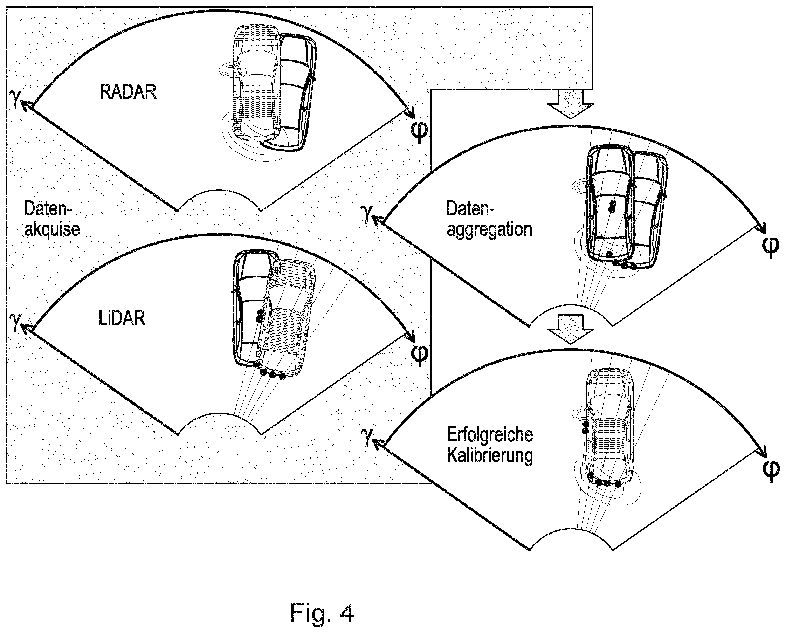

Figur 2 und Figur 3 zeigen zusätzliche Bewegungsmöglichkeiten an Lagerpunkten 135 und 145. Diese ermöglichen eine Fokussierung von Objekten in unterschiedlichen Reichweiten in der jeweiligen Richtung, bestimmt durch die Rotationsbewegung, was mit einer Vergrößerung der Auflösungsqualität von Objekten einhergeht. Figur 4 verdeutlicht die translatorischen Bewegungen, gekoppelt mit den Rotationsbewegungen.

Figur 4 zeigt eine koaxiale Integration von Radar und LiDAR im Scheinwerfer unter Nutzung der Strahlungsmanipulierer. Dies führt dazu, dass 3D-Sensoren bereitgestellt werden, die ein gemeinsames Sichtfeld besitzen. Die Fusion der Sensormessdaten gestattet somit die Detektion von Verkehrsteilnehmern mittels unterschiedlicher Technologien, was Zuverlässigkeit und Robustheit der Fahrassistenzsysteme entscheidend erhöht.

Die Aggregation und Fusion von Radar-(Iso-linien) und LiDAR-Messdaten zur Steigerung der Zuverlässigkeit und Robustheit von Sensordaten bei ADA-Systemen unter Einsatz einer erfindungsgemäßen Multispektralemissionseinrichtung.

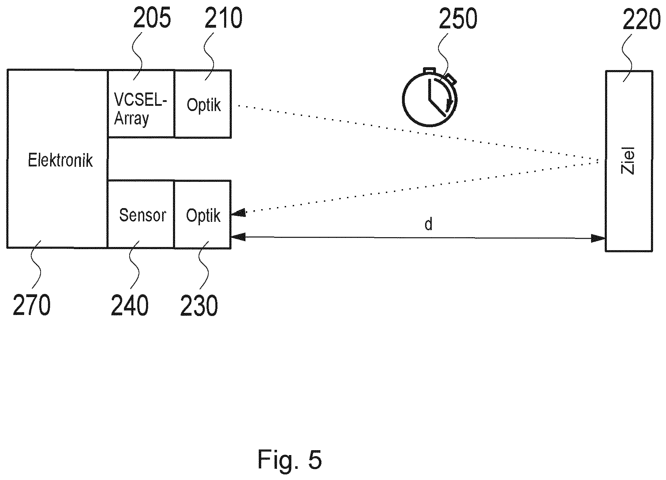

Figur 5 zeigt ein Funktionsprinzip eines LiDAR-Systems zur Distanzmessung mit Sender (Lichtquelle mit Sendeoptik, z. B. VCSEL-Array) mit Empfänger (Sensor mit Empfangsoptik) als Bestandteil einer erfindungsgemäßen Multispektralemissionseinrichtung und dazugehörige Elektronikkomponenten;
Vorzugsweise enthält der Scheinwerfer ein LiDAR-System zur Distanzmessung. Das LiDAR-System besteht aus einem Sender (Lichtquelle mit Sendeoptik, z. B. VCSEL-Array), einem Empfänger (Sensor mit Empfangsoptik) und der dazugehörigen Elektronik (siehe Abbildung 1). Die Elektronik dient der Ansteuerung der Lichtquelle, Datenauslese des Sensors und Datenverarbeitung hin zu Distanzen, welche für die Weiterverarbeitung in der Fahrzeugelektronik oder direkte Visualisierung genutzt werden können. Die Lichtquelle besitzt eine Wellenlänge vorzugsweise im Nahinfrarotbereich von 800-1550 nm. Sie wird mithilfe der Senderoptik auf ein beliebiges Muster festgelegt, z. B. punktförmige, linienförmige oder flächige Beleuchtung. Dabei können für die Kurvenfahrt gezielt Spalten im linken oder rechten Sichtbereich angesteuert werden, vergleichbar mit der bereits etablierten Scheinwerferlichtsteuerung. Darüber hinaus können für eine schnelle, detailreichere Nachmessung beliebige einzelne Regionen von Interesse innerhalb des Sichtfeldes beleuchtet werden (region of interest, ROI). Das ausgesendete Licht wird von Targets in der Fahrzeugumgebung reflektiert und von der Empfangsoptik aufgefangen. Möglich ist ein koaxiales LiDAR-System, bei dem die gleiche Optik sowohl für den Sender als auch den Empfänger verwendet wird, oder ein biaxiales System, bei dem Sender und Empfänger über separate Optiken verfügen. Im Fall eines Flash-LiDAR-Systems ist die Empfangsoptik starr und daher robuster gegen mechanische Einflüsse. Dafür sollte darauf geachtet werden, dass das Empfänger-FoV (Field-of-View) kleiner oder gleich groß dem Sender-FoV ist. Im Fall eines Scanning-LiDAR-Systems wird das gesamte FoV nach einem bestimmten Muster abgescannt. Das ausgesendete Muster kann mithilfe von VCSEL-Arrays ohne beweglich Teile realisiert werden und ist daher robuster gegen mechanische Einflüsse. Ansonsten können sowohl das Sender-FoV als auch das Empfänger-FoV mithilfe von Spiegeln gesteuert werden, welche anfälliger gegen mechanische Einflüsse sind, aber eine präzisere Steuerung erlauben. Der empfangende Sensor sollte die Datenauslese und Datenverarbeitung nur für jeweils beleuchteten Pixel durchführen. Diese effizientere Auslese erlaubt mehr Messungen für jedes aufgenommene Frame oder eine höhere Framerate.

Der Strahlungsmanipulierer 130 beinhaltet einen LiDAR-Reflektor, der sowohl im Sendeals auch Empfangsweg des LiDAR-Systems eingebaut wird. Der LiDAR-Reflektor reflektiert im Nahinfrarotbereich, aber weder im sichtbaren Bereich des Scheinwerferlichts noch im Wellenlängenbereich des Radar-Signals. Der LiDAR-Reflektor kann sowohl gekrümmt für eine zusätzliche Strahlumlenkung als auch planar geformt sein. Für eine gezielte Ausrichtung des LiDAR-FoVs kann der LiDAR-Reflektor ausgerichtet werden durch Rotation in alle drei Raumrichtungen, wobei die Rotation um die Achse entlang des Scheinwerferlichts nur bei gekrümmten LiDAR-Reflektoren relevant ist. Dafür trifft das LiDAR-Licht am besten zentral auf den LiDAR-Reflektor. Demnach ist auch eine translative Verschiebung des LiDAR-Reflektors in alle drei Raumrichtungen sinnvoll. Diese wird ebenfalls benötigt, wenn der LiDAR-Reflektor derart gekrümmt ist, dass dort ebenfalls nur eine bestimmte Ausrichtung möglich ist. Der LiDAR-Reflektor könnte aufgrund seiner rotierenden Eigenschaften als Spiegel für ein 1D- oder 2D-Scanning-LiDAR-System multifunktional verwendet werden, wobei sowohl ein resonanter als auch ein quasistatischer Betrieb der LiDAR-Reflektor-Ausrichtung denkbar ist. Unter allen beliebigen Bewegungen des LiDAR-Reflektors und daher nahezu beliebigen Auftreffwinkeln muss nach wie vor sichergestellt werden, dass der Nahinfrarotbereich reflektiert wird, während das sichtbare Licht und der Radar-Wellenlängenbereich transmittiert werden. Durch die individuell schaltbaren VCSEL-Arrays kann die Umgebung hochselektiv erfasst werden.

Dieses LiDAR-System eignet sich insbesondere für den Einsatz in der erfindungsgemäßen Multispektralemissionseinrichtung Das LiDAR-System weist einen Sender für LiDAR-Strahlung mit einem VCSEL-Array 205 und einer optischen Einrichtung 210 zur Strahlungsumlenkung auf. Dieses System ist so in die erfindungsgemäße Multispektralemissionseinrichtung integriert, dass aus der Lichtpulse auf ein Ziel 220 treffen können und das von dem Ziel 220 reflektierten Lichtsignale von einer Empfangseinheit empfangen werden können. Die Empfangseinheit für die reflektierte LiDAR Strahlung weist vorzugsweise eine optische Einrichtung 230 sowie einen Sensor 240 auf.

Es erfolgt ein Messvorgang 250 zur Messung einer Zeit zwischen einer Emission eines Lichtpulses und dem Auftreffen auf dem Ziel 220. Unter Einsatz einer konventionellen Time-of-Flight-Analyse kann hierbei die Distanz zwischen dem Sender für LiDAR-Strahlung und dem Ziel 220 ermittelt werden. Die Auswertung erfolgt über eine Auswerteelektronik 270.

Nachfolgend wird ein Verfahren zur Herstellung der Multispektralemissionseinrichtung insbesondere der Strahlungsmanipulierer 130, 140 dargestellt.

Die koaxiale Integration von Radar, LiDAR und Licht in einem gemeinsamen Scheinwerfer stellt die dafür benötigten optischen Beschichtungen und ihre Herstellungstechnologie vor besondere Herausforderungen. Die an sich bekannte Beschichtungstechnologie der Physikalischen Dampfphasenabscheidung (PVD), insbesondere des Magnetron-Sputterns wird erfindungsgemäß so weitergebildet, dass sich damit morphologische Schichteigenschaften gezielt einstellen lassen, die die Laser-Strukturierbarkeit des Schichtsystems ermöglichen/ begünstigen, und so z.B. zur Bildung glatter, sauberer Kanten der laserstrukturierten Oberflächentopografien im optimierten Laserstrukturierungsprozess beitragen. Darüber hinaus benötigen Beschichtungen für eine gute Laserstrukturierungs-Qualität eine besonders gute Schichthaftung zum Substratmaterial. Dies ist im Automotive-Sektor meist aus Gewichtsgründen ein Polymer. Damit ergibt sich die Anforderung, dass die deutlichen Unterschiede im Wärmeausdehnungsverhalten der spröd-harten zumeist anorganischen Beschichtung und des Polymersubstrates von den besonders stabilen Haftungskräften übertroffen werden müssen, um den Strukturierungsprozess ohne Versagen der Schichthaftung zu absolvieren.

Die Laserstrukturierung dient primär der Manipulation der Radarwellen durch die Herstellung einer Fresnel'schen Zonenoptik vorzugsweise auf transparent leitfähige Oxidschichten (z.B. AZO, ITO, ...) oder dünne Metallschichten (z.B. Ag, ...). Die Herausforderung besteht für die Radar-optisch wirksame Beschichtung allein in der Verbindung der Leitfähigkeit der Schicht und deren geforderter optischer Transparenz von ≥85% im sichtbaren Spektralbereich.

Bei der hier beschriebenen Anwendung der koaxialen Integration von Radar, LiDAR und Licht in einem gemeinsamen Scheinwerfer hingegen ist diese Anforderung zu erweitern auf alle optischen Schichten im System: die leitfähigen Schichten zur Radarstrahlumlenkung müssen in Multilayer-Systemen mit zusätzlichen dielektrischen optischen Materialien kombiniert werden, um die benötigten spektralen Eigenschaften aller beteiligten Sensor-Systeme und der Beleuchtung gleichermaßen im koaxialen Strahlengang zu gewährleisten. Daraus ergibt sich die Anforderung der Entwicklung von vielschichtigen Mehrschichtdesigns an mehreren Positionen im Strahlungsmanipulierer-Strahlengang, die sowohl die Transmission der Kraftfahrzeugbeleuchtung im VIS, die Reflexion bzw. Transmission der LiDAR-Wellenlängen als auch die optische Manipulation des Radar-Strahlenganges ermöglichen. Daraus folgt eine entscheidende Neuheit für die optische Beschichtung: durch die Einbettung der Radaroptisch wirksamen leitfähigen Schichten in weitere dielektrische Materialien zur Verbindung aller dieser Anforderungen müssen die optischen Mehrschichtsysteme nun insgesamt günstige Eigenschaften für die Laserstrukturierung aufweisen, nicht mehr "nur" die Radar-wirksamen leitfähigen Schichten.

Zum Erreichen der strahlungsmanipulierenden Eigenschaften insbesondere der Strahlungsmanipulierer 130, 140 werden optische Mehrschichtsysteme eingesetzt. Diese bestehen aus Wechselschichten zweier oder mehrerer Schichtmaterialien, die eine geeignete - meist möglichst deutliche - Differenz ihrer Brechungsindizes aufweisen sollten. In abwechselnder Anordnung dünner Schichten von geeigneten Einzelschichtdicken lassen sich Schichtstapel gestalten, die die Spektralverteilung des hindurchtretenden (transmittierten) und des reflektierten Lichtes gezielt beeinflussen. Das Ziel dieser gestalterischen Optimierungsarbeit solcher Mehrschichtsysteme ist die Einstellung von konstruktiver oder destruktiver Interferenz der Lichtwellen in den speziell genutzten Wellenlängenbereichen. Dies kann z.B. je nach Anwendung ein Reflektor (= konstruktive Interferenz in Reflexion → verringerte Transmission), ein Antireflexsystem (destruktive Interferenz in Reflexion → Erhöhung der Transmission) oder ein optischer Filter mit z.B. Band- oder Kantenfilterfunktion für bestimmte Wellenlängenbereiche sein.

Besonders geeignete Materialien sind beispielsweise SiO2 und ZrO2, TiO2, Ta2O5, Nb2O5 oder Si3N4, die vorzugsweise abwechselnd auf ein Trägersubstrat aufgebracht werden und so maßgeschneiderte strahlungsmanipulierende Eigenschaften einschließlich von Antireflex-System aufweisen.

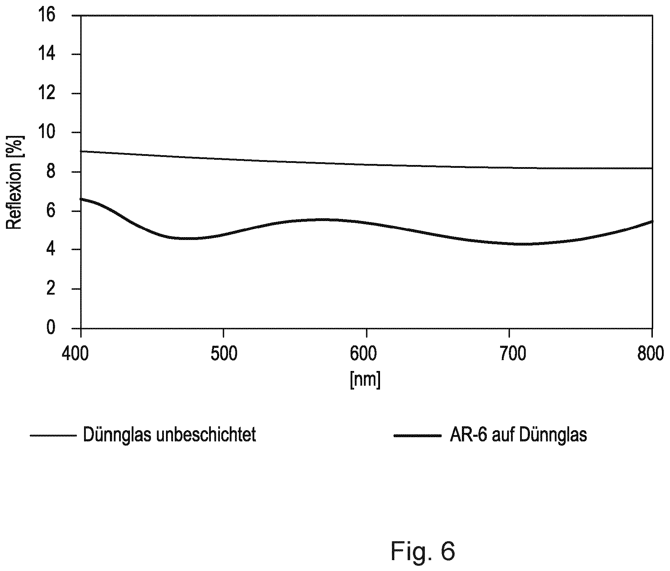

Figur 6 zeigt beispielsweise eine Darstellung einer resultierenden Minderung der spektralen Reflexion unter Einsatz einer geeigneten einseitigen Beschichtung, wobei sich eine signifikante Minderung der Reflexion in einem breiten Wellenlängenbereich ergibt.

Eine weitere besondere Anforderung für die Optikbeschichtung ist die besonders große optische Bandbreite: Aufgrund der unterschiedlichen Wellenlängenbereiche, in denen Radar und LiDAR manipuliert werden sowie die Kfz-Beleuchtung im sichtbaren Spektralbereich nahezu verlustfrei und ohne Farbverschiebung durch das gesamte koaxiale System transmittiert werden müssen, ergibt sich eine optische Spezifikation für den gesamten Wellenlängenbereich zwischen 400 nm und 4 mm, d.h. über 4 Größenordnungen.

Darüber hinaus gewährleisten die optischen Mehrschichtsysteme ihre spektrale Performance für Radar, LiDAR und Beleuchtung über besonders schräge Einfallswinkel und breite Winkelbereiche. Dies verkompliziert die neu zu entwickelnden optischen Mehrschichtdesigns, erhöht z.B. die Anzahl der benötigten Schichten, und konkurriert so mit den Anforderungen zur Gewährleistung einer guten Laserstrukturierbarkeit.

Die Kombination aller dieser Anforderungen in einem laserstrukturierbaren Multilayerschichtsystem für den koaxialen Strahlengang ist neu auf dem Gebiet der optischen Beschichtung in Design und Herstellung.

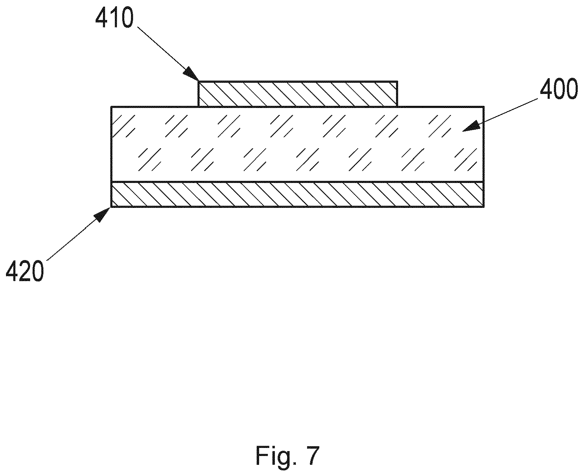

Figur 7 zeigt eine Prinzipdarstellung einer für eine Phasensteuerung einer einfallenden Welle geeigneten Phasenverschiebenden Struktur mit einem Substrat 400 und einer auf einer Oberfläche des Substrats 400 aufgebrachten leitenden Struktur 410 und einer anderen Oberfläche des Substrats 400 aufgebrachten leitenden Massefläche 420.

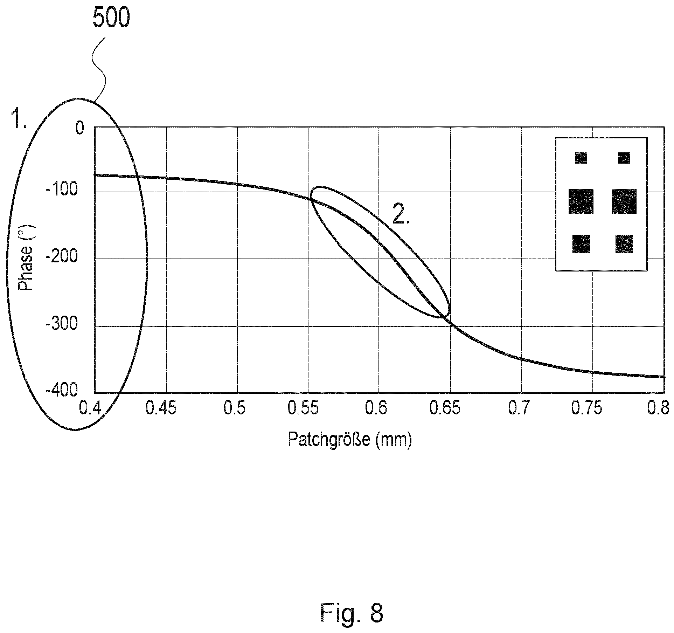

Figur 8 zeigt ein Diagramm bezüglich einer Abhängigkeit einer Phase 500 von der Patchgröße in mm.

Zu erzielende Anforderungen sind vorzugsweise:
▪ Phasensteuerung der einfallenden Welle mittels phasenschiebender Strukturen
   ▪ Reflektiv: Patches, Kreise, Kreuze, ...
   ▪ Diffraktiv: Streifen, Ringe, ...
▪ Herausforderungen:
   ▪ Abdeckung des gesamten Phasenwinkelbereichs (0° - 360°)
   ▪ Vermeidung der Abhängigkeit der Strukturmaße von zu starker Phasenvariation (Fertigungstoleranzen!)
   ▪ Geringe Phasenvariation im Frequenzbereich 76 - 81 GHz.

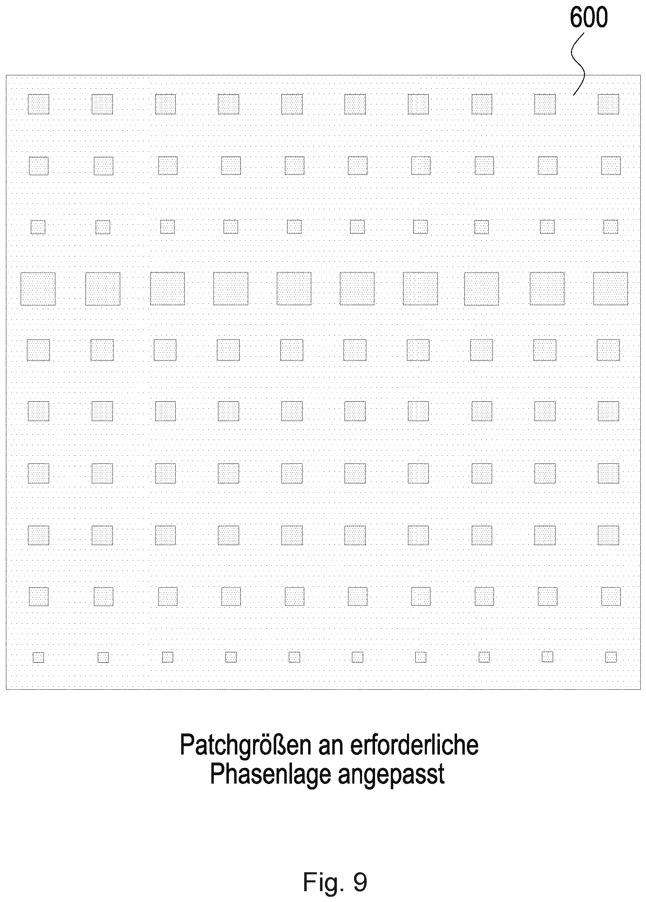

Figur 9 zeigt ein erfindungsgemäßes Reflectarray 600 mit an gewünschte Phasenlagen angepassten Patchgrößen. Dieses Reflectarray 600 ist eine bevorzugte Ausführungsform einer strahlungsmanipulierenden Einrichtung. Es handelt sich hierbei vorzugsweise um eine Leiterplatten-ähnliche Struktur mit einem transparenten Substrat in der Mitte sowie leitfähiger, transparenter strukturierter Beschichtung auf den Außenseiten. Auf der Oberseite sind Quadrate (Patches) strukturiert, während die Unterseite durchgehend leitfähig ist (Massefläche). Durchgeführte Messungen, dass hiermit eine Umlenkung der Welle um 90° möglich ist, obwohl der Reflektor/Strahlungsmanipulierer unter 56.8° angeordnet ist. Dies ist möglich, da jeder Patch der Radarstrahlung eine zuvor berechnete Phasenverschiebung hinzufügt die in einer 90° Reflektion resultiert. Aufgrund der Transparenz können Licht und LiDAR durch die Struktur durchlaufen.

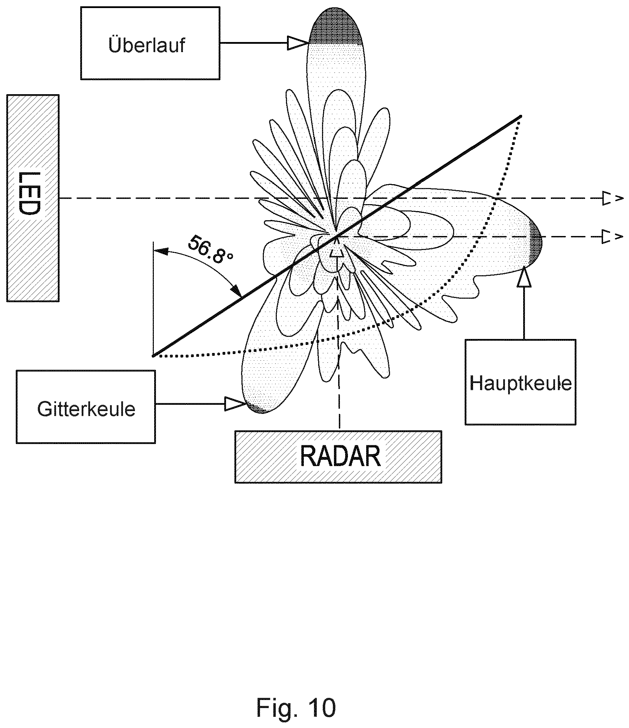

Figur 10 zeigt eine Prinzipdarstellung der Ablenkung elektromagnetischer Wellen durch das in Figur 9 dargestellte Array.

Der Strahlweg 19 der vom Radarmodul 12 emittierten, sich ausbreitende Radarstrahlung bzw. HF-Welle verläuft zunächst quer zur Ausstrahlungsrichtung x, insbesondere zumindest annähernd orthogonal dazu und/oder zumindest annähernd in vertikaler Richtung, und wird dann mittels des Strahlungsmanipulierers für LiDAR-Strahlung, beziehungsweise insbesondere für Radarstrahlung 13 um ca. 90° umgelenkt, wobei mittels des Strahlungsmanipulierer für LiDAR-Strahlung, beziehungsweise insbesondere für Radarstrahlung und/oder mittels einer jeweiligen Strahlungsumlenkungsstruktur 13, 140 ein Detektionsbereich 8 definiert wird.

Der Pfeil z in Fig. 2 deutet die Ausstrahlungsrichtung (Emissionsrichtung) bzw. die entsprechende Längsposition einer jeweiligen Komponente in Ausstrahlungsrichtung an, wobei die jeweilige Längsposition beispielsweise ausgehend von der Lichtquelle erfasst wird. Das Radarmodul und der Strahlungsmanipulierer für LiDAR-Strahlung, beziehungsweise für Radarstrahlung und wahlweise auch die Antenneneinheit sind in zumindest annähernd derselben Längsposition z angeordnet. Die Scheinwerferabdeckung 104 erstreckt sich heckwärts (nach hinten) bis in eine Längsposition kleiner als die Längsposition des Radarmoduls und des Strahlungsmanipulierer für LiDAR-Strahlung, beziehungsweise für Radarstrahlung. Anders ausgedrückt: Die Scheinwerferabdeckung überlappt das Radarmodul und den Strahlungsmanipulierer für LiDAR-Strahlung, beziehungsweise für Radarstrahlung nicht nur, sondern überdeckt diese beiden Komponenten vollständig in Ausstrahlungsrichtung.

## Patentansprüche

1. Multispektrales Sensor-Scheinwerfer-System mit einer Multispektralemissionseinrichtung (110), insbesondere für Fahrzeuge, eingerichtet zum Ausstrahlen von elektromagnetischer Strahlung und eingerichtet zum Erfassen zumindest von reflektierter Radarstrahlung, mit:
einem Scheinwerfer (101) mit einer lichttransparenten Scheinwerferabdeckung und einer hinter der Scheinwerferabdeckung angeordneten Lichtquelle (102) für eine Aussendung von sichtbarem Licht als Scheinwerferlicht;
einem hinter der Scheinwerferabdeckung integriert in den Scheinwerfer angeordneten Radarmodul (111) mit einer Radarantenneneinheit, wobei die Multispektralemissionseinrichtung wenigstens eine strahlungsmanipulierende Einrichtung aufweist,
wobei die Multispektralemissionseinrichtung wenigstens eine Sendeeinheit für LiDAR-Strahlung (150, 150a) und eine Empfangseinheit für LiDAR-Strahlung (150, 150b) und wenigstens zwei Strahlungsmanipulierer (130, 140) aufweist, wobei einer der Strahlungsmanipulierer (130) eine LiDAR-Strahlungs-manipulierende Einrichtung ist, wenigstens ein Strahlungsmanipulierer (140) für Radarstrahlung eine radarstrahlungsmanipulierende Einrichtung ist, wobei der Strahlungsmanipulierer für LiDAR-Strahlung (130) und die Sendeeinheit für LiDAR-Strahlung (150, 150a) so angeordnet sind, dass der Strahlungsmanipulierer für LiDAR-Strahlung (130) von der Sendeeinheit für LiDAR-Strahlung (150, 150a) ausgestrahlte LiDAR-Strahlung umleitet, dass der Strahlungsmanipulierer für LiDAR-Strahlung (130) so eingerichtet ist, dass von außen durch die Scheinwerferabdeckung hindurchgelangende LiDAR-Strahlung zu der Empfangseinheit für LiDAR-Strahlung (150, 150b) geleitet wird und dass der Strahlungsmanipulierer für Radarstrahlung (140) so eingerichtet ist, dass von außen durch die Scheinwerferabdeckung hindurchgelangende Radarstrahlung zu der Empfangseinheit für Radarstrahlung (111) geleitet wird und wobei die Sendeeinheit für LiDAR-Strahlung (150, 150a), der Strahlungsmanipulierer für LiDAR-Strahlung (130), das Radarmodul (111) und der zweite Strahlungsmanipulierer (140) so angeordnet sind, dass wenigstens ein Strahlungskegel der umgeleiteten LiDAR-Strahlung (104) und wenigstens ein Strahlungskegel der umgeleiteten Radarstrahlung ausgerichtet werden können,
wobei die Multispektralemissionseinrichtung mit einer Steuereinheit verbunden ist, **dadurch gekennzeichnet, dass** die Steuereinheit so eingerichtet ist, dass sie die Strahlungsmanipulierer (130, 140) während des Betriebs der Multispektralemissionseinrichtung so steuert, dass die Strahlungsmanipulierer (130, 140) unabhängig voneinander jeweils um wenigstens eine Achse gedreht werden, so dass durch die separat erfolgende Rotation der wenigstens zwei Strahlungsmanipulierer (130, 140) FOVs der LiDAR-Strahlung und der Radarstrahlung unabhängig voneinander eingestellt werden und dass die separat erfolgende Rotation der Strahlungsmanipulierer (130, 140) zur Erhöhung der Erfassungsgenauigkeit von Objekten eingesetzt wird.

2. Multispektrales Sensor-Scheinwerfer-System nach Anspruch 1,
**dadurch gekennzeichnet, dass** eine Vereinigung von Wellenlängen über 4 Größenordnungen, 400 nm bis 4 mm, erfolgt.

3. Multispektrales Sensor-Scheinwerfer-System nach Anspruch 1 oder nach Anspruch 2,
**dadurch gekennzeichnet, dass** wenigstens ein Strahlungskegel der umgeleiteten LiDAR-Strahlung (104), wenigstens ein Strahlungskegel der umgeleiteten Radarstrahlung und ein Strahlungskegel des Scheinwerferlichts parallel zueinander und/oder koaxial und/oder sich überlappend verlaufen.

4. Multispektrales Sensor-Scheinwerfer-System nach einem der Ansprüche 2 oder 3, **dadurch gekennzeichnet, dass** wenigstens ein Strahlungskegel der umgeleiteten LiDAR-Strahlung (104) und wenigstens ein Strahlungskegel der umgeleiteten Radarstrahlung zusätzlich überlappend verlaufen.

5. Multispektrales Sensor-Scheinwerfer-System nach einem der vorigen Ansprüche, **dadurch gekennzeichnet, dass** der Strahlungskegel des Scheinwerferlichts koaxial zu den Strahlungskegeln der LiDAR- und Radarstrahlung verläuft.

6. Multispektrales Sensor-Scheinwerfer-System nach einem der vorigen Ansprüche, **dadurch gekennzeichnet, dass** der Strahlungsmanipulierer für LiDAR-Strahlung (130) so ausgestaltet ist, dass von der Sendeeinheit für LiDAR-Strahlung (150, 150a) ausgestrahlte LiDAR-Strahlung so umgeleitet wird, dass wenigstens ein weiterer Strahlungskegel für umgeleitete LiDAR-Strahlung gebildet wird und dass wenigstens eine weitere Empfangseinheit für LiDAR-Strahlung vorgesehen ist, wobei die weitere Empfangseinheit für LiDAR-Strahlung so angeordnet ist, dass von außen durch die Scheinwerferabdeckung hindurchgelangende weitere LiDAR-Strahlung zu der Empfangseinheit für weitere LiDAR-Strahlung geleitet wird.

7. Multispektrales Sensor-Scheinwerfer-System nach einem der vorigen Ansprüche, **dadurch gekennzeichnet, dass** der Strahlungsmanipulierer für Radarstrahlung (140) so ausgestaltet ist, dass von dem Radarmodul (111) ausgestrahlte Radarstrahlung so umgeleitet wird, dass wenigstens ein weiterer Strahlungskegel für umgeleitete Radarstrahlung gebildet wird und dass wenigstens eine weitere Empfangseinheit für Radarstrahlung vorgesehen ist, wobei die weitere Empfangseinheit für Radarstrahlung so angeordnet ist, dass von außen durch die Scheinwerferabdeckung hindurchgelangende weitere Radarstrahlung zu der Empfangseinheit für weitere Radarstrahlung geleitet wird.

8. Multispektrales Sensor-Scheinwerfer-System nach einem der vorhergehenden Ansprüche, **dadurch gekennzeichnet, dass** wenigstens einer der Strahlungsmanipulierer (130, 140) während einer Montage der Multispektralemissionseinrichtung um eine z-Achse, die zumindest annähernd in der Ausstrahlungsrichtung der Multispektralemissionseinrichtung verläuft, rotatorisch gelagert ist.

9. Multispektrales Sensor-Scheinwerfer-System nach einem der vorhergehenden Ansprüche, **dadurch gekennzeichnet, dass** wenigstens einer der Strahlungsmanipulierer (130, 140) während eines Betriebs der Multispektralemissionseinrichtung um eine y-Achse rotatorisch gelagert ist, so dass der FOV schnell und zuverlässig in horizontaler Richtung eingestellt werden kann.

10. Multispektrales Sensor-Scheinwerfer-System nach einem der vorhergehenden Ansprüche **dadurch gekennzeichnet, dass** wenigstens einer der Strahlungsmanipulierer (130, 140) während eines Betriebs der Multispektralemissionseinrichtung um eine x-Achse rotatorisch gelagert ist, so dass der FOV schnell und zuverlässig in vertikaler Richtung eingestellt werden kann.

11. Multispektrales Sensor-Scheinwerfer-System nach einem der vorigen Ansprüche, **dadurch gekennzeichnet, dass** wenigstens einer der Strahlungsmanipulierer (130, 140) translatorisch gelagert ist.

12. Multispektrales Sensor-Scheinwerfer-System nach einem der vorigen Ansprüche, **dadurch gekennzeichnet, dass** die Sendeeinheit für LiDAR-Strahlung (150, 150a) thermisch isoliert ist, so dass ein temperaturabhängiger Wellenlängendrift der LiDAR-Sendeeinheit vermieden wird.

13. Multispektrales Sensor-Scheinwerfer-System nach einem der vorhergehenden Ansprüche,
**dadurch gekennzeichnet, dass** in den Strahlungsmanipulierer durch Dünnschichtabtragung oder Dünnschichtauftragung ein Strukturmuster eingebracht wurde, oder wobei der Strahlungsmanipulierer mittels Dünnschichtabtragung oder mittels Dünnschichtauftragung oder durch Aufbringen einer Folie hergestellt wurde.

14. Verfahren zum Herstellen einer Multispektralemissionseinrichtung für ein multispektrales Sensor-Scheinwerfer-System nach einem der vorhergehenden Ansprüche,
**dadurch gekennzeichnet, dass** durch Ausbilden wenigstens einer radarstrahlungsmanipulierenden Einrichtung, insbesondere in Ausgestaltung als frequenzselektive Strahlungsumlenkungsstruktur, wobei der Strahlungsmanipulierer einen leitenden Teil in Ausgestaltung als lichttransparente, elektrisch leitfähige Schicht aufweist oder zumindest teilweise dadurch gebildet ist, und wobei in den Radarstrahlungsmanipulierer durch Dünnschichtabtrag ein Strukturmuster zur Erzeugung einer gezielten Reflexion der Radarwellenlängen eingebracht wird, insbesondere mittels Laser und ferner **gekennzeichnet durch** Ausbilden wenigstens einer LiDAR-Strahlungs-manipulierenden Einrichtung, insbesondere in Ausgestaltung als frequenzselektive Strahlungsumlenkungsstruktur, wobei der LiDAR-Strahlungsmanipulierer einen leitenden Teil in Ausgestaltung als lichttransparente, elektrisch leitfähige Schicht aufweist oder zumindest teilweise dadurch gebildet ist.

15. Verfahren zum Betreiben einer Multispektralemissionseinrichtung eines multispektralen Sensor-Scheinwerfer-Systems nach einem der Ansprüche 1 bis 13,
wobei die Scheinwerfer-Lichtstrahlung in Form eines Lichtkegels sowie die LiDAR-Strahlung in Form eines primären LiDAR-Signals als gebündelte elektromagnetische Strahlung in einem LiDAR-Strahlungskegel (104) emittiert wird, dass Radarstrahlung in Form eines primären Radarsignals als gebündelte elektromagnetische Strahlung in einem Radar-Strahlungskegel emittiert wird,
wobei der Scheinwerfer-Strahlungskegel, der LiDAR-Strahlungskegel und der Radar-Strahlungskegel parallel und koaxial zueinander verlaufen, wobei von wenigstens einem Objekt reflektierte sekundäre LiDAR-Signale und von dem Objekt reflektierte sekundäre Radarsignale erfasst und ausgewertet werden, wobei aus der Auswertung einzelne, mehrere oder sämtliche der folgenden Informationen gewonnen werden:
- ein Winkel bzw. eine Richtung zum Objekt
- eine Entfernung zum Objekt (̵aus der Zeitverschiebung zwischen Senden und Empfangen)̵
- eine Relativbewegung zwischen der Multispektralemissionseinrichtung und dem Objekt
wobei bei der Auswertung eine Parallelität und eine Koaxialität des LiDAR-Strahlungskegels und des Radar-Strahlungskegels berücksichtigt werden,
wobei die Multispektralemissionseinrichtung mit einer Steuereinheit verbunden ist,
**dadurch gekennzeichnet, dass** die Steuereinheit die Strahlungsmanipulierer (130, 140) während des Betriebs der Multispektralemissionseinrichtung so steuert, dass die Strahlungsmanipulierer (130, 140) unabhängig voneinander jeweils um wenigstens eine Achse gedreht werden, so dass durch die separat erfolgende Rotation der wenigstens zwei Strahlungsmanipulierer (130, 140) FOVs der LiDAR-Strahlung und der Radarstrahlung unabhängig voneinander eingestellt werden und dass die separat erfolgende Rotation der Strahlungsmanipulierer (130, 140) in Echtzeit zur Erhöhung der Erfassungsgenauigkeit von Objekten eingesetzt wird.

16. Verfahren nach Anspruch 15,
**dadurch gekennzeichnet, dass** wenigstens ein weiterer LiDAR-Strahlungskegel und/oder ein weiterer Radar-Strahlungskegel emittiert wird, so dass eine winkelauflösende Erkennung des Objektes erfolgt.

17. Verfahren zum Betreiben einer Multispektralemissionseinrichtung eines multispektrales Sensor-Scheinwerfer-Systems nach einem der Ansprüche 1 bis 13 mit den Merkmalen der Ansprüche 15 oder 16,
**dadurch gekennzeichnet, dass** wellenlängenselektive Strukturen eingesetzt werden, die eine Beeinflussung sensorspezifischer Spektralbereiche und dadurch eine Reduktion thermischer Effekte durch unerwünschte Absorption bewirken.

18. Fahrzeug das ein multispektrales Sensor-Scheinwerfer-System mit einer Multispektralemissionseinrichtung (110) nach einem der Ansprüche 1 bis 13 und eine Einheit für eine Fusion von Sensormessdaten für Radar und LiDAR aufweist, **dadurch gekennzeichnet, dass** die Steuereinheit so eingerichtet ist, dass sie die Strahlungsmanipulierer (130, 140) während des Betriebs der Multispektralemissionseinrichtung so steuert, dass die Strahlungsmanipulierer (130, 140) unabhängig voneinander jeweils um wenigstens eine der Achsen gedreht werden, so dass durch die separat erfolgende Rotation der wenigstens zwei Strahlungsmanipulierer (130, 140) FOVs der LiDAR-Strahlung und der Radarstrahlung unabhängig voneinander eingestellt werden und dass die separat erfolgende Rotation der Strahlungsmanipulierer (130, 140) zur Erhöhung der Erfassungsgenauigkeit von Objekten eingesetzt wird.

## Claims

1. Multispectral sensor headlight system with a Multispectral emission device (110), in particular for vehicles, set up for emitting electromagnetic radiation and set up for detecting at least reflected radar radiation, with:
a headlight (101) with a light-transparent headlight cover (4) and a light source (102) arranged behind the headlight cover for emitting visible light as headlight light;
a radar module (111) arranged behind the headlight cover and integrated in the headlight, having a radar antenna unit, the Multispectral emission device having at least one radiation-manipulating device,
wherein the Multispectral emission device comprises at least one transmitting unit for LiDAR radiation (150, 150a) and one receiving unit for LiDAR radiation (150, 150b) and at least two radiation manipulators (130, 140), wherein one of the radiation manipulators (130) is a LiDAR radiation manipulating device, at least one radiation manipulator (140) for radar radiation is a radar radiation manipulating device, wherein the radiation manipulator for LiDAR radiation (130) and the transmitting unit for LiDAR radiation (150, 150a) are arranged such that the radiation manipulator for LiDAR radiation (130) redirects LiDAR radiation emitted by the transmitting unit for LiDAR radiation (150, 150a), that the radiation manipulator for LiDAR radiation (130) is arranged such that LiDAR radiation passing through the headlight cover from the outside is guided to the receiving unit for LiDAR radiation (150, 150b) and that the radiation manipulator for radar radiation (140) is arranged such that radar radiation passing through the headlight cover from the outside is guided to the receiving unit for radar radiation (111) and wherein the transmitting unit for LiDAR radiation (150, 150a), the radiation manipulator for LiDAR radiation (130), the radar module (111) and the second radiation manipulator (140) are arranged in such a way that at least one radiation cone of the diverted LiDAR radiation (104) and at least one radiation cone of the diverted radar radiation can be aligned,
wherein the Multispectral emission device is connected to a control unit,
**characterised in that** the control unit is arranged to control the radiation manipulators (130, 140) during operation of the Multispectral emission device such that the radiation manipulators (130, 140) are each rotated independently of one another about at least one axis, so that FOVs of the LiDAR radiation and the radar radiation are set independently of each other by the separate rotation of the at least two radiation manipulators (130, 140) and that the separate rotation of the radiation manipulators (130, 140) is used to increase the detection accuracy of objects.

2. Multispectral sensor headlight system according to claim 1,
**characterised in that** a combination of wavelengths over 4 orders of magnitude, 400 nm to 4 mm, takes place.

3. Multispectral sensor headlight system according to claim 1 or claim 2,
**characterised in that** at least one radiation cone of the redirected LiDAR radiation (104), at least one radiation cone of the redirected radar radiation and a radiation cone of the headlamp light run parallel to one another and/or coaxially and/or overlap.

4. Multispectral sensor headlight system according to any one of claims 2 or 3,
**characterised in that** at least one radiation cone of the redirected LiDAR radiation (104) and at least one radiation cone of the redirected radar radiation additionally overlap.

5. Multispectral sensor headlight system according to any one of the preceding claims,
**characterised in that** the radiation cone of the headlamp light runs coaxially to the radiation cones of the LiDAR and radar radiation.

6. Multispectral sensor headlight system according to any one of the preceding claims,
**characterised in that** the radiation manipulator for LiDAR radiation (130) is designed such that LiDAR radiation emitted by the transmitting unit for LiDAR radiation (150, 150a) is redirected such that at least one further radiation cone for redirected LiDAR radiation is formed, and **in that** at least one further receiving unit for LiDAR radiation is provided, wherein the further receiving unit for LiDAR radiation is arranged in such a way that further LiDAR radiation passing through the headlight cover from the outside is guided to the receiving unit for further LiDAR radiation.

7. Multispectral sensor headlight system according to any one of the preceding claims,
**characterised in that** the radiation manipulator for radar radiation (140) is designed such that radar radiation emitted by the radar module (111) is redirected such that at least one further radiation cone for redirected radar radiation is formed and **in that** at least one further receiving unit for radar radiation is provided, the further receiving unit for radar radiation being arranged such that further radar radiation passing through the headlight cover from the outside is guided to the receiving unit for further radar radiation.

8. Multispectral sensor headlight system according to any one of the preceding claims,
**characterised in that** at least one of the radiation manipulators (130, 140) is rotatably mounted about a z-axis, which extends at least approximately in the radiation direction of the Multispectral emission device, during assembly of the Multispectral emission device.

9. Multispectral sensor headlight system according to any one of the preceding claims,
**characterised in that** at least one of the radiation manipulators (130, 140) is rotatably mounted about a y-axis during operation of the Multispectral emission device, so that the FOV can be quickly and reliably adjusted in the horizontal direction.

10. Multispectral sensor headlight system according to any one of the preceding claims,
**characterised in that** at least one of the radiation manipulators (130, 140) is rotatably mounted about an x-axis during operation of the Multispectral emission device, so that the FOV can be quickly and reliably adjusted in the vertical direction.

11. Multispectral sensor headlight system according to any one of the preceding claims,
**characterised in that** at least one of the radiation manipulators (130, 140) is mounted in a translatory manner.

12. Multispectral sensor headlight system according to any one of the preceding claims,
**characterised in that** the transmitting unit for LiDAR radiation (150, 150a) is thermally insulated, so that a temperature-dependent wavelength drift of the LiDAR transmitting unit is avoided.

13. Multispectral sensor headlight system according to any one of the preceding claims,
**characterised in that** a structure pattern has been introduced into the radiation manipulator by thin-film ablation or thin-film application, or wherein the radiation manipulator has been produced by thin-film ablation or thin-film application or by application of a film.

14. Method of manufacturing a Multispectral emission device for a multispectral sensor headlight system according to any one of the preceding claims,
**characterised in that** by forming at least one radar radiation manipulating device, in particular in the form of a frequency-selective radiation deflection structure, wherein the radiation manipulator has a conductive part in the form of a light-transparent, electrically conductive layer or is at least partially formed thereby, and wherein a structural pattern for generating a targeted reflection of the radar wavelengths is introduced into the radar radiation manipulator by thin-film ablation, in particular by means of a laser and further **characterised by** the formation of at least one LiDAR radiation manipulator, in particular in the form of a frequency-selective radiation deflection structure, wherein the LiDAR radiation manipulator has a conductive part in the form of a light-transparent, electrically conductive layer or is at least partially formed thereby.

15. Method of operating a Multispectral emission device of a multispectral sensor headlight system according to any one of claims 1 to 13,
wherein the headlight light radiation is emitted in the form of a light cone and the LiDAR radiation is emitted in the form of a primary LiDAR signal as focussed electromagnetic radiation in a LiDAR radiation cone (104), that radar radiation is emitted in the form of a primary radar signal as focussed electromagnetic radiation in a radar radiation cone wherein the headlight radiation cone, the LiDAR radiation cone and the radar radiation cone extend parallel and coaxially to one another, wherein secondary LiDAR signals reflected by at least one object and secondary radar signals reflected by the object are detected and analysed, wherein individual, several or all of the following information is obtained from the analysis:
- an angle or a direction to the object
- a distance to the object (̵from the time difference between transmission and recipient)̵
- a relative movement between the Multispectral emission device and the object whereby parallelism and coaxiality of the LiDAR radiation cone and the radar radiation cone are taken into account in the evaluation,
wherein the Multispectral emission device is connected to a control unit, **characterised in that** the control unit controls the radiation manipulators (130, 140) during operation of the Multispectral emission device in such a way that the radiation manipulators (130, 140) are each rotated independently of one another about at least one axis, so that FOVs of the LiDAR radiation and the radar radiation are set independently of each other by the separately occurring rotation of the at least two radiation manipulators (130, 140) and that the separately occurring rotation of the radiation manipulators (130, 140) is used in real time to increase the detection accuracy of objects.

16. Method according to claim 15,
**characterised in that** at least one further LiDAR radiation cone and/or one further radar radiation cone is emitted so that the object is detected with angular resolution.

17. Method for operating a Multispectral emission device of a multispectral sensor headlight system according to one of claims 1 to 13 with the characteristics of claims 15 or 16, **characterised in that** wavelength-selective structures are used which influence sensor-specific spectral ranges and thereby reduce thermal effects due to undesired absorption.

18. A vehicle comprising a multispectral sensor headlight system comprising a Multispectral emission device (110) according to any one of claims 1 to 13 and a unit for a fusion of sensor measurement data for radar and LiDAR, **characterised in that** the control unit is arranged to control the radiation manipulators (130, 140) during operation of the Multispectral emission device such that the radiation manipulators (130, 140) are each rotated independently of one another about at least one of the axes, so that FOVs of the LiDAR radiation and the radar radiation are set independently of each other by the separately occurring rotation of the at least two radiation manipulators (130, 140) and that the separately occurring rotation of the radiation manipulators (130, 140) is used to increase the detection accuracy of objects.

## Revendications

1. Système de phares à capteur multispectral comprenant un dispositif d'émission multispectrale (110), en particulier pour des véhicules, agencé pour émettre un rayonnement électromagnétique et agencé pour détecter au moins un rayonnement radar réfléchi, comprenant :
un projecteur (101) avec un cache de projecteur (4) transparent à la lumière et une source lumineuse (102) disposée derrière le cache de projecteur pour une émission de lumière visible comme lumière de projecteur ;
un module radar (111) avec une unité d'antenne radar, disposé derrière le cache du phare et intégré dans le phare, le dispositif d'émission multispectrale présentant au moins un dispositif de manipulation du rayonnement,
dans lequel le dispositif d'émission multispectrale comprend au moins une unité d'émission de rayonnement LiDAR (150, 150a) et une unité de réception de rayonnement LiDAR (150, 150b) et au moins deux manipulateurs de rayonnement (130, 140), l'un des manipulateurs de rayonnement (130) étant un dispositif de manipulation de rayonnement LiDAR, au moins un manipulateur de rayonnement (140) pour le rayonnement radar étant un dispositif de manipulation de rayonnement radar, dans lequel le manipulateur de rayonnement LiDAR (130) et l'unité d'émission de rayonnement LiDAR (150, 150a) sont agencés de telle sorte que le manipulateur de rayonnement LiDAR (130) dévie le rayonnement LiDAR émis par l'unité d'émission de rayonnement LiDAR (150, 150a), en ce que le manipulateur de rayonnement LiDAR (130) est agencé de telle sorte, en ce que le manipulateur de rayonnement pour le rayonnement radar (140) est agencé de telle sorte que le rayonnement radar passant de l'extérieur à travers le couvercle de phare est dirigé vers l'unité de réception pour le rayonnement LiDAR (150, 150b) et en ce que le manipulateur de rayonnement pour le rayonnement radar (140) est agencé de telle sorte que le rayonnement radar passant de l'extérieur à travers le couvercle de phare est dirigé vers l'unité de réception pour le rayonnement radar (111) et où l'unité d'émission pour le rayonnement LiDAR (150, 150a), le manipulateur de rayonnement LiDAR (130), le module radar (111) et le deuxième manipulateur de rayonnement (140) sont disposés de telle sorte qu'au moins un cône de rayonnement du rayonnement LiDAR dévié (104) et au moins un cône de rayonnement du rayonnement radar dévié peuvent être alignés,
dans lequel le dispositif d'émission multispectrale est connecté à une unité de commande, **caractérisé en ce que** l'unité de commande est agencée pour commander les manipulateurs de rayonnement (130, 140) pendant le fonctionnement du dispositif d'émission multispectrale de sorte que les manipulateurs de rayonnement (130, 140) sont tournés indépendamment l'un de l'autre autour d'au moins un axe, de sorte que, par la rotation séparée des au moins deux manipulateurs de rayonnement (130, 140), les FOV du rayonnement LiDAR et du rayonnement radar sont réglés indépendamment l'un de l'autre et que la rotation séparée des manipulateurs de rayonnement (130, 140) est utilisée pour augmenter la précision de détection des objets.

2. Système de phares à capteurs multispectraux selon la revendication 1,
**caractérisé en ce qu'**une combinaison de longueurs d'onde sur 4 ordres de grandeur, 400 nm à 4 mm, est effectuée.

3. Système de phares à capteurs multispectraux selon la revendication 1 ou selon la revendication 2,
**caractérisé en ce qu'**au moins un cône de rayonnement du rayonnement LiDAR dévié (104), au moins un cône de rayonnement du rayonnement radar dévié et un cône de rayonnement de la lumière du phare s'étendent parallèlement les uns aux autres et/ou coaxialement et/ou en se chevauchant.

4. Système de phares à capteurs multispectraux selon l'une des revendications 2 ou 3,
**caractérisé en ce qu'**au moins un cône de rayonnement du rayonnement LiDAR dévié (104) et au moins un cône de rayonnement du rayonnement radar dévié s'étendent en outre en se chevauchant.

5. Système de phares à capteurs multispectraux selon l'une quelconque des revendications précédentes,
**caractérisé en ce que** le cône de rayonnement de la lumière du phare est coaxial aux cônes de rayonnement du LiDAR et du radar.

6. Système de phares à capteurs multispectraux selon l'une quelconque des revendications précédentes,
**caractérisé en ce que** le manipulateur de rayonnement LiDAR (130) est configuré de telle sorte que le rayonnement LiDAR émis par l'unité d'émission de rayonnement LiDAR (150, 150a) est dévié de telle sorte qu'au moins un autre cône de rayonnement est formé pour le rayonnement LiDAR dévié et **en ce qu'**au moins une autre unité de réception de rayonnement LiDAR est prévue, l'unité de réception supplémentaire pour le rayonnement LiDAR étant disposée de telle sorte que le rayonnement LiDAR supplémentaire passant de l'extérieur à travers le cache de phare est dirigé vers l'unité de réception pour le rayonnement LiDAR supplémentaire.

7. Système de phares à capteurs multispectraux selon l'une quelconque des revendications précédentes,
**caractérisé en ce que** le manipulateur de rayonnement pour le rayonnement radar (140) est conçu de telle sorte que le rayonnement radar émis par le module radar (111) est dévié de telle sorte qu'au moins un autre cône de rayonnement pour le rayonnement radar dévié est formé et **en ce qu'**au moins une autre unité de réception pour le rayonnement radar est prévue, l'autre unité de réception pour le rayonnement radar étant disposée de telle sorte que le rayonnement radar supplémentaire passant de l'extérieur à travers le cache de phare est guidé vers l'unité de réception pour le rayonnement radar supplémentaire.

8. Système de phares à capteurs multispectraux selon l'une quelconque des revendications précédentes,
**caractérisé en ce qu'**au moins l'un des manipulateurs de rayonnement (130, 140) est supporté en rotation autour d'un axe z qui s'étend au moins approximativement dans la direction d'émission du dispositif d'émission multispectrale pendant un montage du dispositif d'émission multispectrale.

9. Système de phares à capteurs multispectraux selon l'une quelconque des revendications précédentes,
**caractérisé en ce qu'**au moins l'un des manipulateurs de rayonnement (130, 140) est supporté en rotation autour d'un axe y pendant un fonctionnement du dispositif d'émission multispectrale, de sorte que le FOV peut être ajusté rapidement et de manière fiable dans la direction horizontale.

10. Système de phares à capteurs multispectraux selon l'une quelconque des revendications précédentes,
**caractérisé en ce qu'**au moins l'un des manipulateurs de rayonnement (130, 140) est supporté en rotation autour d'un axe x pendant un fonctionnement du dispositif d'émission multispectrale, de sorte que le FOV peut être réglé rapidement et de manière fiable dans la direction verticale.

11. Système de phares à capteurs multispectraux selon l'une quelconque des revendications précédentes,
**caractérisé en ce qu'**au moins un des manipulateurs de rayonnement (130, 140) est supporté en translation.

12. Système de phares à capteurs multispectraux selon l'une quelconque des revendications précédentes,
**caractérisé en ce que** l'unité d'émission de rayonnement LiDAR (150, 150a) est thermiquement isolée, de sorte qu'une dérive de longueur d'onde de l'unité d'émission LiDAR en fonction de la température est évitée.

13. Système de phares à capteurs multispectraux selon l'une quelconque des revendications précédentes,
**caractérisé en ce qu'**un motif structurel a été introduit dans le manipulateur de rayonnement par ablation de couche mince ou par application de couche mince, ou dans lequel le manipulateur de rayonnement a été fabriqué par ablation de couche mince ou par application de couche mince ou par application d'un film.

14. Procédé de fabrication d'un dispositif d'émission multispectrale pour un système de phare à capteur multispectral selon l'une quelconque des revendications précédentes,
**caractérisé en ce que** par la formation d'au moins un dispositif de manipulation de rayonnement radar, en particulier sous la forme d'une structure de déviation de rayonnement sélective en fréquence, le manipulateur de rayonnement présentant une partie conductrice sous la forme d'une couche électriquement conductrice transparente à la lumière ou étant formé au moins partiellement par celle-ci, et un modèle de structure étant introduit dans le manipulateur de rayonnement radar par enlèvement de couche mince pour produire une réflexion ciblée des longueurs d'onde radar, en particulier au moyen d'un laser et **caractérisé en outre par** la formation d'au moins un dispositif de manipulation de rayonnement LiDAR, en particulier sous la forme d'une structure de déviation de rayonnement sélective en fréquence, le manipulateur de rayonnement LiDAR présentant une partie conductrice sous la forme d'une couche électriquement conductrice transparente à la lumière ou étant formé au moins partiellement par celle-ci.

15. Procédé de mise en œuvre d'un dispositif d'émission multispectrale d'un système de projecteur à capteur multispectral selon l'une quelconque des revendications 1 à 13,
le rayonnement lumineux du phare sous la forme d'un cône de lumière ainsi que le rayonnement LiDAR sous la forme d'un signal LiDAR primaire sont émis sous la forme d'un rayonnement électromagnétique concentré dans un cône de rayonnement LiDAR (104), le rayonnement radar sous la forme d'un signal radar primaire est émis sous la forme d'un rayonnement électromagnétique concentré dans un cône de rayonnement radar, le cône de rayonnement de phare, le cône de rayonnement LiDAR et le cône de rayonnement de radar s'étendant parallèlement et coaxialement les uns aux autres, des signaux LiDAR secondaires réfléchis par au moins un objet et des signaux radar secondaires réfléchis par l'objet étant détectés et évalués, une, plusieurs ou toutes les informations suivantes étant obtenues à partir de l'évaluation :
- un angle ou une direction par rapport à l'objet
- une distance par rapport à l'objet (̵à partir du décalage temporel entre l'émission et la réception)̵
- un mouvement relatif entre le dispositif d'émission multispectrale et l'objet un parallélisme et une coaxialité du cône de rayonnement LiDAR et du cône de rayonnement radar étant pris en compte lors de l'évaluation,
dans lequel le dispositif d'émission multispectrale est connecté à une unité de commande,
**caractérisé en ce que** l'unité de commande commande les manipulateurs de rayonnement (130, 140) pendant le fonctionnement du dispositif d'émission multispectrale de sorte que les manipulateurs de rayonnement (130, 140) sont tournés indépendamment l'un de l'autre autour d'au moins un axe, de sorte que, grâce à la rotation séparée des au moins deux manipulateurs de rayonnement (130, 140), les FOV du rayonnement LiDAR et du rayonnement radar sont réglés indépendamment l'un de l'autre et que la rotation séparée des manipulateurs de rayonnement (130, 140) est utilisée en temps réel pour augmenter la précision de détection des objets.

16. Procédé selon la revendication 15,
**caractérisé en ce qu'**au moins un autre cône de rayonnement LiDAR et/ou un autre cône de rayonnement radar est émis, de sorte qu'une détection à résolution angulaire de l'objet a lieu.

17. Procédé pour faire fonctionner un dispositif d'émission multispectrale d'un système de projecteur à capteur multispectral selon l'une des revendications 1 à 13 avec les caractéristiques des revendications 15 ou 16, **caractérisé en ce qu'**on utilise des structures sélectives en longueur d'onde qui ont pour effet d'influencer des domaines spectraux spécifiques au capteur et de réduire ainsi les effets thermiques par absorption indésirable.

18. Véhicule comprenant un système de phares à capteurs multispectraux avec un dispositif d'émission multispectrale (110) selon l'une des revendications 1 à 13 et une unité pour une fusion de données de mesure de capteurs pour radar et LiDAR,
**caractérisé en ce que** l'unité de commande est agencée pour commander les manipulateurs de rayonnement (130, 140) pendant le fonctionnement du dispositif d'émission multispectrale de sorte que les manipulateurs de rayonnement (130, 140) sont tournés indépendamment l'un de l'autre autour d'au moins un des axes, de sorte que, par la rotation séparée des au moins deux manipulateurs de rayonnement (130, 140), les FOV du rayonnement LiDAR et du rayonnement radar sont réglés indépendamment l'un de l'autre et que la rotation séparée des manipulateurs de rayonnement (130, 140) est utilisée pour augmenter la précision de détection des objets.
